# FASCICULE DE BREVET EUROPEEN

(11) **EP 1 534 487 B1**
(45) Date de publication et mention de la délivrance du brevet: **15.10.2008**
(21) Numéro de dépôt: 03762712.2
(22) Date de dépôt: 30.06.2003
(51) Int. Cl.: B29B 17/02

(54) **PROCEDE DE PRECONCENTRATION DE MATERIAUX ORGANIQUES DE SYSTHESE EN PROVENANCE DE DECHETS DE BROYAGE DE BIENS DURABLES ARRIVES EN FIN DE VIE**
VERFAHREN ZUR VORKONZENTRATION VON AUS DEM ZERKLEINERN VON GÜTERN, DIE DAS ENDE IHRER LEBENSDAUER ERREICHT HABEN, STAMMENDEN HALTBAREN ORGANISCHEN SYNTHETISCHEN MATERIALIEN
METHOD FOR PRECONCENTRATION OF ORGANIC SYNTHETIC MATERIALS DERIVED FROM SHREDDING OF END-OF-LIFE DURABLE GOODS

(30) Priorité: 02.07.2002 FR 0208242
(43) Date de publication de la demande: 01.06.2005
(73) Titulaire: Galloo Plastics (S.A.), 59250 Halluin (FR)
(72) Inventeur: DE FERAUDY, Hugues, F-69220 Charentay (FR)
(74) Mandataire: Gaucherand, Michel
(86) Numéro de dépôt international: PCT/FR2003/002011
(87) Numéro de publication internationale: WO 2004/004997

(56) Documents cités:
- WO-A-01/17742
- FR-A- 2 751 262
- US-B1- 6 335 376

## Description

### Domaine de l'invention

L'invention concerne un procédé de pré-concentration de matériaux organiques de synthèse à valoriser tels que les matériaux polymères de synthèse, issus de la destruction par broyage de biens durables arrivés en fin de vie.

Un problème important des industries du recyclage est d'avoir à traiter une grande variété de flux plus ou moins polluants et pollués, plus ou moins concentrés en matériaux divers dont certains sont valorisables. Or, les équipements de triage de déchets industriels sont spécialisés pour traiter un type de déchet particulier : c'est pourquoi ils ne peuvent être efficaces qu'à la condition d'être alimentés par un flux de déchets qui leur soit adapté et provenant sans aucun traitement des déchets collectés ou destinés à être mis en décharge.

Ainsi, afin d'améliorer la valorisation des déchets et de la rendre maximale, il est nécessaire d'alimenter les équipements de triage spécialisés pour un type de déchet, avec des flux à traiter déjà pré-concentrés en matériaux à valoriser.

Cette étape de pré-concentration des déchets a, dès lors, au moins deux objectifs dont :
✔ l'un est de séparer des déchets afin de les orienter vers les moyens de traitement spécialisés,
✔ et l'autre est de pré-concentrer un flux de déchets à traiter afin d'améliorer le rendement global de la chaîne de traitement des déchets en augmentant le ratio « masse de produits triés à valoriser par rapport à la masse totale de produits entrant dans la chaîne de traitement de déchets ».

C'est pourquoi l'invention concerne un procédé de préconcentration d'une fraction de matériaux polymères de synthèse à valoriser à partir de résidus issus de la destruction de biens durables arrivés en fin de vie, ces résidus contenant des matériaux organiques de synthèse valorisables et d'autres matériaux, dont certains sont également valorisables et les autres constituent des matériaux contaminants non valorisables à éliminer définitivement.

Plus particulièrement, l'invention concerne un procédé permettant d'extraire tous matériaux polymères de synthèse dans un état solide ou expansé de quelque composition que ce soit, présents dans un flux de résidus contenant d'autres matériaux considérés comme des matériaux contaminants tels que métaux, minéraux et autres contaminants, afin d'arriver à un taux de concentration en poids de matériaux polymères de synthèse d'au moins 60 %, de préférence d'au moins 85 %, et très préférentiellement d'au moins 90 %. Ces matériaux pré-concentrés sont destinés à être soumis par la suite à un autre traitement de séparation et de sélection dans le but de récupérer différentes fractions de matériaux polymères de synthèse homogènes, de même qu'une fraction de polymères mousse extraite.

Les flux sur lesquels s'applique le procédé de l'invention proviennent généralement de résidus de broyage automobile et de biens de consommation durables arrivés en fin de vie, pour lesquels une multiplicité de types de matériaux polymères de synthèse sont à considérer être valorisables et pour lesquels une multiplicité d'autres matériaux sont considérés comme des contaminants gênants tels que métaux, minéraux et matériaux contaminants divers et doivent être éliminés. D'autres déchets, tels que des déchets industriels mélangés contenant des matériaux polymères de synthèse et des déchets d'emballage en provenance de collectes municipales et contenant également des matériaux polymères valorisables mélangés peuvent être tout autant considérés comme potentiellement valorisables.

### Etat de la technique

Le problème important posé aux industries du recyclage est connu depuis quelques années déjà et a fait l'objet de recherches industrielles relativement nombreuses dont quelques cas ont été sélectionnés pour établir l'état de la technique du domaine de l'invention.

Un premier document (USP n°6,024,226) décrit une technologie et un procédé qui permettent de séparer et recueillir en continu des matériaux issus de mélanges de particules solides hétérogènes provenant essentiellement des déchets solides en utilisant une pluralité de cellules de séparation, chaque cellule étant remplie d'un liquide de densité particulière et différente des autres cellules.

Une première cellule de séparation reçoit le flux de matériaux hétérogènes à trier qui est mis en contact avec un premier liquide-support de densité d'environ 1,0 permettant à une première fraction de matériaux à séparer de flotter dans le liquide-support en formant une fraction légère alors que la fraction restante de densité supérieure coule en formant une fraction lourde. Cette fraction lourde est reprise et introduite dans une deuxième cellule de séparation dont le milieu liquide-support a une densité différente de celle de la première cellule, entraînant de ce fait une nouvelle séparation en fractions légères et fractions lourdes.

Le procédé ainsi évoqué apparaît être surtout adapté au traitement de fractions métalliques en vue de récupérer les non ferreux, ainsi qu'au traitement des fractions organiques de synthèse éventuellement purifiées quant à leur teneur en matériaux organiques de synthèse lourds - essentiellement les chlorés - pour une valorisation thermique moins polluante.

Un autre document (W09801276) décrit un procédé et un dispositif pour le traitement des déchets de matières polymères de synthèse mélangées, les particules qui excèdent un poids particulier ou une densité particulière (décrite comme fraction lourde) étant séparées préalablement des déchets plus légers tels que films et papiers qui sont aspirés et gérés différemment. Selon ce brevet, la fraction lourde de polymères thermoplastiques rigides mélangés, est broyée dans deux types de broyeurs, puis tamisée à des dimensions fines de quelques millimètres, puis séparée par criblage et triée par des moyens tels que aspiration et/ou séparation par charge électrostatiques. À cette fin, le dispositif de traitement comporte une étape de broyage, une étape de tamisage et/ou une étape de séparation électrostatique. Les flux de matériaux concernés à traiter sont essentiellement des déchets d'emballage plastiques plus ou moins contaminés, dont il s'agit d'extraire une fraction en vue d'une valorisation thermique. Le broyage fin et le criblage permettent de réduire la teneur en matériaux chlorés et inorganiques.

Un autre document (DE19915481) décrit un procédé de traitement de la fraction légère de résidus de broyage qui comporte les étapes de réduction de taille par broyage, d'élimination des métaux ferreux restant et des particules sur lesquelles resteraient attachés des métaux non ferreux. Un second broyage est pratiqué pour obtenir des tailles de particules réduites suivi d'un séchage du flux, d'une séparation du flux séché des fractions organiques légères les plus grandes et une récupération de ces fractions. Un fractionnement du matériau restant en au moins deux tailles de particules est ensuite pratiqué par criblage et tamisage suivi d'une séparation sous la forme de fraction organique et fraction inorganique. Le procédé impose de sécher l'ensemble du flux initial de matériaux à traiter, ce qui est potentiellement avantageux dans une valorisation thermique, mais ce qui est coûteux et inutile pour une valorisation des matériaux constitutifs de ces résidus de broyage.

Un autre document (DE19526791) décrit un procédé et un dispositif pour séparer des mélanges de métaux et polymères de synthèse associés et/ou en mélange, par des étapes de réduction de taille des particules, de séparation magnétique, de criblage, de classification aéraulique et de séparation des non ferreux d'avec les matériaux polymères. Le procédé initial sépare les métaux du broyage, en utilisant un criblage sur lit fluidisé, une telle séparation par classification permettant de séparer différentes fractions dont une fraction métallique légère libre de toute autre fraction, une fraction métallique lourde, une fraction de matériaux légers, une fraction de particules de fils et une fraction de matériaux polymères mélangés. L'unité de traitement comporte les étapes suivantes : broyage, séparation des fines, transfert et classification sur lit fluidisé en vue de réaliser toutes ces séparations. Toutefois la finalité est de récupérer des fractions métalliques et non d'effectuer une préconcentration de la fraction des matériaux polymères de synthèse en vue de leur valorisation.

Un autre document (DE19953208) décrit un procédé et une installation qui permettent de séparer à sec des matériaux en mélanges, sous forme de particules, par des technologies aérauliques sur une table à lit fluidisé.

L'aspiration ou/et l'évacuation par air se fait au travers du lit fluidisé. Les matériaux à séparer ont des densités de 0,8.

Un autre document (US 6,335,376) décrit un procédé de séparation de matériaux polymères chargés ou non se présentant sous la forme d'un mélange provenant de divers types de déchets fragmentés issus de la destruction par broyage de divers articles consommables parvenus en fin de vie. Ce procédé concerne plus particulièrement la séparation de matériaux polymères de densités très proches les uns des autres et consiste à modifier les caractéristiques physiques desdits matériaux pour provoquer chez certains d'entre eux une évolution de leur densité apparente qui provoque une différenciation entre eux et une séparation sélective par densité apparente. Ainsi, le document cité décrit des moyens pour accentuer des écarts de densité des matériaux polymères présents, en utilisant par exemple la capacité d'adsorption d'eau pour chaque type de polymère qui se fait de manière différente selon les divers types de polymères présents dans le mélange à traiter, puis à transformer par la suite par chauffage cette eau adsorbée en vapeur d'eau, cette vapeur d'eau formant des microbulles et modifiant plus ou moins intensément la densité apparente des matériaux polymères ainsi traités, qui peuvent être séparés. C'est pourquoi, la finalité de ce document est d'essayer de séparer finement des fractions homogènes de polymères à recycler, mais le procédé décrit ne peut pas conduire à une préconcentration de matériaux polymères de synthèse usagés, en vue:
- de séparer au mieux les déchets polluants des déchets de matériaux polymères à valoriser pour orienter le flux préconcentré vers des moyens de traitement spécialisés à l'égard de flux de matériaux polymères usagés.
- d'améliorer le rendement global des moyens de traitement spécialisés de ces flux de matériaux polymères usagés.

Un autre document (WO01/17742) décrit un procédé de traitement d'un flux de déchets, en matériaux polymères, d'emballages ménagers et/ou de cassettes audio et vidéo en fin de vie.

Dans le cas de ces déchets très spécifiques, les bandes magnétiques, qui sont des films minces, perturbent le fonctionnement des chaînes de traitement de tels déchets, en particulier dans la zone des convoyeurs, sensibles à la présence non maîtrisée de ces bandes en film de grandes longueurs. C'est pourquoi, le procédé propose un ensemble industriel comportant deux étapes de broyage et deux étapes de séparation magnétique, dans lequel :
- la première étape de séparation magnétique doit éliminer les métaux présents pour protéger le broyeur qui, par la suite, démantèle les cassettes audio et vidéo pour libérer les bandes magnétiques ;
- la deuxième étape de séparation magnétique doit récupérer les bandes magnétiques libérées qui sont ensuite soumises à une agglomération par traitement thermique provoquant leur rétraction et dès lors leur agglomération.

Le procédé ainsi évoqué apparaît être seulement adapté au traitement particulier de ces cassettes audio et vidéo en fin de vie pour en récupérer d'une part, les matériaux polymères utilisés dans la réalisation des boîtiers, et d'autre part les matériaux polymères constitutifs des bandes ou films magnétiques.

Ainsi, l'état de la technique propose divers procédés de triage de matériaux ayant pour objet de sélectionner et/ou d'extraire d'un mélange de matériaux, un matériau en particulier ou encore d'extraire une fraction non ferreuse de matériaux métalliques ou bien de traiter une fraction de matériaux de polymères thermoplastiques d'origine diverse pour en réduire la teneur en polymères chlorés, séparer des matériaux métalliques et des matériaux polymères associés ou autres. Mais l'état de la technique ne propose pas de procédés d'enrichissement pour le traitement de flux de matériaux de compositions extrêmement diverses, tels ceux issus de la destruction par broyage d'automobiles ou de biens de consommation durables arrivant en fin de vie.

De tels flux contiennent à la fois des matériaux métalliques, des matériaux minéraux et des matériaux organiques d'origine naturelle ou de synthèse tels que par exemple des matériaux polymères de synthèse.

### Objectifs de l'invention

De nombreux objectifs sont dès lors assignés à l'objet de l'invention, de telle sorte que l'essentiel au moins des inconvénients perceptibles dans l'état de la technique en soit éliminé.

Un premier objet de l'invention est de créer un procédé et son installation industrielle correspondante permettant de réaliser une pré-concentration de matériaux polymères de synthèse valorisables de tous types présents dans le flux de matériaux issus du broyage de biens de consommation en fin de vie, en particulier de véhicules automobiles. Un autre objet de l'invention est de créer un procédé et une installation industrielle correspondante, permettant de réaliser à haut débit une pré-concentration des seuls matériaux polymères de synthèse valorisables présents dans le flux complexe formé de déchets issus du broyage de biens de consommation durables en fin de vie tels qu'automobiles, électroménager, articles électriques et/ou électroniques après un premier traitement rustique, par leur séparation d'avec les autres matériaux contaminants tels que les matériaux polymères expansés, les matériaux métalliques, les matériaux minéraux comme par exemple du sable, du verre, des matériaux organiques naturels tels que le bois par exemple.

Un autre objet de l'invention est de créer un procédé et une installation industrielle correspondante qui permettent de produire, à partir du flux complexe formé de déchets issus du broyage de biens de consommation durables, tels qu'évoqués précédemment, un pré-concentré des seuls matériaux polymères valorisables à caractère compact, c'est-à-dire exempt de matériaux polymères expansés à cellules ouvertes ou fermées, dont la concentration en matériaux polymères compacts valorisables au terme du traitement par le procédé soit d'au moins 60 % en poids et préférentiellement d'au moins 80 % en poids, ce pré-concentré pouvant être traité ensuite de façon efficace dans des installations ou par des technologies appropriées de sélection pour en extraire des matériaux polymères homogènes ayant des degrés de pureté proches des matériaux polymères vierges et ce, pour chaque famille de matériaux polymères présents dans ledit flux.

Un autre objet de l'invention est de créer un procédé et une installation industrielle correspondante qui permettent de produire, à partir du flux complexe formé de déchets issus du broyage de biens de consommation durables, une autre fraction de matériaux valorisables constituée par des flocons et mousses flexibles, en particulier de mousse polyuréthane à cellules ouvertes.

### Exposé sommaire de l'invention

Selon les divers objets de l'invention précédemment énoncés, le procédé de traitement de mélange de matériaux fragmentés issus du broyage en fin de vie de véhicules automobiles et de biens de consommation durables, tels que l'électroménager en fin de vie, diminue les inconvénients manifestés lors de l'examen de l'état de la technique et apporte, en outre, de substantielles améliorations dans les moyens décrits jusqu'à ce jour.

Selon l'invention, le procédé de traitement d'un mélange de matériaux issus de résidus de broyage d'articles consommables en fin de vie se présentant sous une forme fragmentée, pour pré-concentrer ce mélange en matériaux valorisables et en éliminer au moins pour partie les matériaux contaminant les matériaux valorisables, ledit mélange à traiter comprenant :
✔ une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
✔ des fractions de matériaux contaminants formés de matériaux minéraux et/ou de matériaux métalliques et/ou de matériaux organiques autres que les matériaux polymères non expansés et/ou des matériaux polymères de synthèse dans un état expansé,
caractérisé en ce qu'il comporte :
a) une première étape de séparation mécanique par criblage et/ou facteur de forme pour extraire au moins pour partie du mélange des matériaux fragmentés, la fraction des matériaux minéraux contaminants,
b) une étape de séparation aéraulique, par flux gazeux, comportant une entrée du mélange de matériaux provenant de l'étape a) débarrassé au moins pour partie de la fraction des matériaux minéraux et trois sorties pour l'extraction de fractions de matériaux séparés dont la première fraction (b1) consiste en une fraction de matériaux polymères de synthèse ultra légers et/ou expansés, la deuxième fraction (b2) consiste en une fraction de matériaux lourds présents dans le mélange et la troisième fraction (b3) consiste en une fraction des matériaux polymères de synthèse à valoriser se présentant sous une forme fragmentée allant d'un état rigide à un état souple,
c) une étape de broyage de la fraction (b3) des matériaux polymères à valoriser provenant de l'étape b), à la maille de libération des matériaux contaminants inclus, adhérants ou assemblés aux fragments de la fraction des matériaux polymères à valoriser,
d) une seconde étape de séparation mécanique, par criblage et/ou séparation aéraulique par flux gazeux, de la fraction des matériaux polymères de synthèse à valoriser provenant de l'étape c) de broyage pour en éliminer au moins pour partie la fraction des matériaux contaminants libérés lors du broyage et en extraire la fraction des matériaux valorisables constituant le mélange souhaité, pré-concentré en matériaux valorisables, contenant encore des contaminants.

Pour être à même de percevoir toute la portée du procédé selon l'invention, il est important que soient définis les mélanges de matériaux à valoriser (contenant des matériaux contaminants à éliminer au moins partiellement) constituant le flux de matériaux entrant dans le procédé de l'invention qui, à la sortie dudit procédé, donne la fraction de matériaux valorisables formant un mélange préconcentré à au moins 60 % et préférentiellement à au moins 85% de matériaux valorisables. Ainsi le procédé de traitement selon l'invention d'un mélange de matériaux à valoriser se présentant sous une forme fragmentée, pour l'obtention d'un mélange de matériaux pré-concentrés en matériaux polymères de synthèse à valoriser, thermoplastiques et/ou thermodurcissables, est alimenté à partir de deux flux « I » et « II », résidus de broyage automobile et biens de consommation durables tels que des domaines de l'électroménager et/ou l'électronique parvenus en fin de vie. Ces résidus de broyage ont leur plus grande dimension d'au plus 250 mm et préférentiellement d'au plus 200 mm.

Les flux « I » et « II » peuvent être mis en oeuvre séparément ou en mélange selon la manière dont opère le broyeuriste, par campagne ou non. Le flux « I » est la fraction qui est appelée dans le métier « lourds non aspirés », à la sortie du broyeur d'automobiles et de biens de consommation durables, séparés ou non des métaux, le flux « II » étant le flux léger aspiré connu sous l'appellation fluffs à la sortie dudit broyeur. Les fragments métalliques libres peuvent être séparés des parties non métalliques par des techniques magnétiques classiques et par courant de Foucauld.

Le flux « I » ou flux « Lourds » comporte des caoutchoucs et des polymères thermoplastiques et thermodurcissables non aspirés, des restes de métaux, des matériaux inorganiques, du bois... qui sont passés au travers d'une grille de séparation ayant une maille de 20-250 mm, de préférence 20 à 200 et très préférentiellement de 100 à 150 mm du broyeur primaire, dans le cas du broyage automobile et biens de consommation durables.

Le flux « II » ou flux « Légers » ou « fluff » constitué de matériaux thermoplastiques et thermodurcissables se présente sous la forme de plaques hétérogènes en dimensions, de morceaux de mousse et/ou de feuilles, de tissus adhérants à des substrats, de fils, de déchets de films.

Certains broyeurs de véhicules et/ou de biens de consommation durables opèrent sous aspersion d'eau pour éviter les risques d'explosion et les formations de poussières qui sont autant de risques supplémentaires pour l'environnement. Ainsi, les résidus de broyage n'ont pas la même teneur en humidité d'un lot à l'autre selon les quantités de mousses à cellules ouvertes, de fibres et de tissus.

En particulier lorsque les mousses flexibles à cellule ouvertes qui sont essentiellement des mousses polyuréthane (provenant des sièges automobiles), sont imbibées d'eau, il est préférable de les traiter par des procédés adaptés qui tiennent compte de leurs caractéristiques différentes et plus précisément de leur densité apparente et leur séparation semble devoir s'effectuer en exploitant leur facteur de forme.

Par contre, lorsque les résidus sont dans un état sec, une première aspiration légère pourra être particulièrement avantageuse pour extraire ces mêmes mousses flexibles à cellules ouvertes.

La récupération des métaux peut se faire à chaque étape du procédé de pré-concentration de la fraction des matériaux organiques de synthèse, par les moyens connus tels que séparation magnétique et séparation par courant de Foucauld.

Le procédé de pré-concentration des fractions matériaux valorisables qui sont des polymères de synthèse s'adapte à tout système de broyage de véhicules ou/et de biens de consommation durables déjà en place, quelle que soit la technique de broyage pour la destruction de ces biens en fin de vie.

Le procédé, les technologies, les équipements et les installations de pré-concentration s'y rattachant sont préférentiellement positionnés sur le site du gros broyeur automobile, dans le cas du traitement de résidus de broyage automobile.

Pour permettre une bonne compréhension des divers matériaux valorisables et contaminants constituant le mélange de matériaux à soumettre au procédé de préconcentration selon l'invention, résultant d'un broyage destructif de biens de consommations en fin de vie, tels que véhicules automobiles par exemple, ces divers matériaux sont précisés dans les définitions suivantes :
✔ Les matériaux lourds et les matériaux légers : les matériaux lourds constituent la fraction la plus lourde, issue d'une étape de séparation par densité réelle ou densité apparente, dans le procédé selon l'invention, du flux de matière en traitement, par opposition aux matériaux légers constituant la fraction légère du même flux.

Il est à noter qu'au moins une partie des matériaux lourds d'une étape de séparation peuvent devenir les matériaux légers de l'étape de séparation ultérieure, et vis versa : une partie des matériaux légers d'une étape peut être considérée comme matériaux lourds dans l'étape de séparation ultérieure.
✔ Les matériaux ultra légers : la première fraction légère du flux de matière en traitement, séparée par densité ou densité apparente, est appelée fraction d'ultra légers. Cette fraction d'ultra légers est notamment composée de mousse, de textiles, de films, de morceaux de fils, ces matériaux préférentiellement dans un état sec ayant une densité qui augmente en fonction du taux d'humidité.
✔ Les matériaux ultra lourds : la première fraction lourde du flux de matière en traitement, séparée par densité ou densité apparente, est appelée fraction d'ultra lourds. Cette fraction d'ultra lourds est notamment composée de sables, de métaux, de caoutchoucs, de bois.
✔ Les matériaux polymères de synthèse : correspondent à la partie du flux de matière en traitement composée de polymères thermoplastiques et thermodurcissables à valoriser qui peuvent être extraits des résidus de broyage et réutilisés ou recyclés.
✔ La fraction des matériaux organiques autre que polymères à valoriser est principalement composée de bois, de déchets de textiles organiques, de déchets de fils ou autres.
✔ La fraction des matériaux polymères mousses est essentiellement formée par les mousses à cellules ouvertes ainsi que les mousses alvéolaires à cellules fermées telles que les mousses polyuréthanes, matériaux polymères élastomériques ou non ayant fait l'objet d'une action porophore dans la masse.
✔ La fraction des matériaux contaminants est formée par des déchets ou particules métalliques, des morceaux de caoutchouc, de verre, du gravier, du sable, du bois, des déchets de mousses polymères, de films, de filaments de tissus en matériaux polymères de synthèse ou autres déchets qui doivent en être éliminés.

### Description détaillée de l'invention

Le procédé de pré-concentration en matériaux polymères par traitement d'un mélange de matériaux fragmentés issus de résidus de broyage d'objets en fin de vie, tels que par exemple automobiles, électroménagers, matériels électroniques et formé de fractions de matériaux aussi divers que des matériaux polymères, des métaux, des matériaux minéraux et des matériaux d'origine organique autres que les matériaux polymères ci-dessus évoqués, à l'exclusion des matériaux polymères expansés, concerne tous les matériaux polymères que l'on cherche à valoriser, de types thermoplastiques et thermodurs, qui sont présents dans les objets consommables précités, parvenus en fin de vie.

Le procédé de pré-concentration en matériaux polymères du mélange de matériaux divers précités, issus de résidus de broyage consiste à traiter ledit mélange pour en éliminer par extraction et au moins partiellement, les matériaux contaminants non valorisables formés des fractions de matériaux autres que les polymères à valoriser ; cette élimination permet ainsi un enrichissement dudit mélange en matériaux polymères valorisables par une augmentation de leur concentration.

Une fois pré-concentré par élimination au moins partielle des fractions contaminantes non valorisables, le mélange enrichi en matériaux polymères valorisables peut être traité par des moyens appropriés sortant du domaine de l'objet de l'invention.

Selon le procédé de l'invention, il est possible d'extraire un premier produit formé par des matériaux polymères valorisables se présentant sous l'aspect d'un mélange de matériaux polymères fragmentés et/ou de compositions chimiques multiples et variées, ce mélange pouvant contenir encore des fractions de matériaux contaminants qui seront ultérieurement éliminés.

Selon ce même procédé de l'invention, il est également possible d'extraire la fraction des polymères expansés, en particulier celle formée de mousses à cellules ouvertes, constituant l'un des contaminants gênants.

### Etape a) du procédé selon l'invention

Selon le procédé de traitement d'un mélange de matériaux, objet de l'invention, l'étape a) reçoit la totalité du flux des matériaux divers fragmentés se présentant sous la forme d'un mélange provenant des résidus de broyage d'objets en fin de vie tels que précédemment définis. Cette étape a) du procédé selon l'invention est une étape de séparation mécanique par criblage et/ou facteur de forme qui peut être réalisée par l'intermédiaire d'un dispositif comportant un moyen de criblage tel qu'une grille à maille calibrée de séparation, adaptée aux matériaux dont on recherche la séparation et plus particulièrement à la forme des fragments valorisables.

Un moyen de criblage adapté à la réalisation de l'étape de séparation a) peut être choisi parmi les dispositifs munis d'un tambour rotatif à maille calibrée, d'une grille vibrante à maille calibrée ou de tout autre dispositif muni d'un moyen de séparation calibré : la plus grande dimension de la maille calibrée, ou du moyen de séparation calibrée, est généralement de 25 mm au plus et préférentiellement comprise entre 1 mm et 15 mm.

A titre d'illustration, lors de la réalisation de l'étape a), une séparation mécanique par criblage calibré peut se faire par exemple, au moyen d'un « trommel » formé d'une cage à surface de séparation cylindrique, à axe de révolution faiblement incliné, la maille calibrée de la surface destinée à la séparation étant formée par des ouvertures dont la plus grande dimension est adaptée à la dimension et/ou au facteur de forme des matériaux contaminants à éliminer, de telle sorte que :
✔ seules les fractions de polymères valorisables se présentant sous la forme de plaquettes sont retenues par la maille de tri du moyen de séparation calibré avec un minimum de matériaux contaminants dont la plus grande dimension et/ou le facteur de forme sont supérieurs à la maille calibrée de tri,
✔ les fractions de matériaux contaminants et de matériaux valorisables dont la plus grande dimension et/ou le facteur de forme différent de ceux des fractions de polymères valorisables et dont la plus grande dimension et/ou le facteur de forme sont inférieurs à la dimension de la maille calibrée de tri, passent dans l'espace libre de la maille de tri et sont éliminées.

Cette première étape de séparation mécanique par criblage et/ou facteur de forme permet l'élimination d'une fraction importante de matériaux contaminants comportant essentiellement des matériaux minéraux tels que des morceaux de verre, des graviers et du sable qui viendraient perturber le fonctionnement des étapes suivantes et qui doivent être éliminés. Quant aux matériaux polymères de synthèses à valoriser, ils sont dans un état de fragmentation tel que les quantités éliminées au cours de cette étape de criblage et qui constituent des pertes, sont très faibles.

### Etape b) du procédé selon l'invention

Le flux des matériaux provenant de l'étape a), débarrassé pour partie de cette première fraction de matériaux contaminants, entre dans l'étape b) du procédé de traitement selon l'invention. Cette étape b) du procédé de traitement selon l'invention est destinée à séparer d'une manière sélective les différentes fractions des matériaux présents dans le flux des divers matériaux provenant de l'étape a) du procédé de traitement, ces différentes fractions étant constituées de matériaux dits ultra légers, dits légers et dits lourds.

La fraction des matériaux ultra légers b1) est formée de déchets de films, de polymères, de déchets de fils d'origine naturelle ou synthétique et de mousses de polymères.

La fraction des matériaux légers b3) est formée de tous les matériaux polymères à valoriser, se présentant sous des formes fragmentées très diverses telles que plaques, écailles, paillettes, pulvérulents, rigides ou flexibles.

La fraction des matériaux lourds b2), quant à elle, peut contenir des matériaux organiques naturel ou de synthèse tels que des déchets de bois, du caoutchouc ou autres, des matériaux minéraux tels que des résidus de sable, de verre dont les dimensions et/ou facteurs de forme ont été inopérants dans la précédente étape a) de séparation par criblage et des résidus métalliques dont les dimensions et/ou facteurs de forme ont également été inopérants dans ladite étape précédente a) de séparation par criblage.

La séparation des diverses fractions ultra légères, légères et lourdes dans l'étape b) recevant le flux de matériaux provenant de l'étape a) est de type aéraulique et peut se pratiquer par aspiration et/ou soufflage dans une zone de séparation aéraulique comprenant au moins un moyen de séparation aéraulique fonctionnant par insufflation et/ou par aspiration d'un flux gazeux, cette zone comportant une entrée du mélange des matériaux à séparer et trois sorties permettant l'extraction de la fraction (b1) de matériaux polymères ultra légers et/ou expansés à éliminer, la fraction (b2) consistant en des matériaux lourds contaminants à éliminer et de la fraction (b3) formée des matériaux polymères à valoriser et à préconcentrer.

Dans le cas où la zone de séparation aéraulique de l'étape b) du procédé selon l'invention comporte un seul moyen de séparation aéraulique, ce moyen de séparation aéraulique comporte au moins deux zones spécifiques de séparation. L'une des zones spécifiques de séparation aéraulique est à la fois la zone qui permet l'alimentation en matériaux à séparer dont le flux entrant est soumis au cours de son introduction dans ladite zone à une séparation aéraulique précoce par flux gazeux de la fraction (b1) des matériaux ultra légers à éliminer et à la sortie immédiate de ladite fraction (b1) du moyen de séparation aéraulique. L'autre zone spécifique de séparation aéraulique, munie d'un moyen de criblage et également soumise à un flux gazeux, traite le mélange des fractions des matériaux (b2) lourds et contaminants et des matériaux (b3) légers et valorisables provenant de la première zone spécifique, le flux gazeux séparant et entraînant vers une sortie du moyen de séparation aéraulique la fraction (b3) des matériaux légers et valorisables, tandis que la fraction (b2) des matériaux lourds contaminants se sépare de la fraction (b3) par gravité et est éliminée du moyen de séparation aéraulique par une sortie appropriée. Un tel moyen de séparation aéraulique à deux zones spécifiques de séparation peut être choisi dans le groupe constitué par les séparateurs-nettoyeurs-calibreurs modulaires comportant des cribles et une double aspiration : un séparateur aéraulique de ce type est commercialisé, par exemple, par la société WESTRUP.

Dans le cas où la zone de séparation aéraulique de l'étape b) du procédé selon l'invention se compose de deux moyens de séparation aérauliques qui sont des séparateurs aérauliques, lesdits moyens de séparation sont dès lors montés en série de telle manière qu'une sortie au moins des fractions des matériaux contaminants (b1) et (b2) se trouve sur le premier moyen de séparation aéraulique.

Selon une variante relative à la présence de deux moyens de séparation aérauliques ou séparateurs aérauliques par flux gazeux dans la zone de séparation aéraulique, le premier moyen de séparation aéraulique qui reçoit le flux entrant de matériaux à séparer en fractions de matériaux contaminants et valorisables provenant de l'étape a), traite ce flux en deux fractions, de telle sorte que la fraction des matériaux ultralégers (b1) est extraite par la partie supérieure du premier moyen de séparation aéraulique, tandis qu'un mélange des fractions de matériaux lourds contaminants (b2) et des matériaux légers à valoriser (b3) est extraite par la partie basse dudit moyen de séparation aéraulique. Ce mélange des fractions des matériaux lourds contaminants (b2) et des légers à valoriser (b3) est introduit dans le deuxième moyen de séparation aéraulique, la fraction des matériaux lourds (b2) contaminants étant éliminée par la partie basse du deuxième moyen de séparation aéraulique tandis que la fraction (b3) des matériaux à valoriser est extraite pour alimenter l'étape c) du procédé selon l'invention.

Selon une autre variante relative à la présence de deux moyens de séparation aérauliques ou séparateurs aérauliques à flux gazeux dans la zone de séparation aéraulique, le premier moyen de séparation qui reçoit le flux entrant de matériaux à séparer en fractions de matériaux contaminants et valorisables provenant de l'étape a) traite le flux en deux fractions de telle sorte que la fraction des matériaux lourds contaminants (b2) est extraite par la partie basse dudit moyen de séparation aéraulique tandis qu'un mélange des fractions des matériaux ultra légers contaminants (b1) et des matériaux légers valorisables (b3) est extrait par la partie supérieure du premier moyen de séparation aéraulique. Ce mélange des fractions de matériaux ultra légers contaminants (b1) et de matériaux légers valorisables (b3) est introduit dans le deuxième séparateur aéraulique, la fraction des matériaux ultra légers contaminants (b1) étant éliminée par la partie supérieure du deuxième moyen de séparation aéraulique, tandis que la fraction des matériaux légers valorisables est extraite par la partie inférieure dudit moyen de séparation pour alimenter l'étape c) du procédé selon l'invention.

Que soit pratiquée l'utilisation d'un ou plusieurs moyens de séparation aérauliques, dans l'étape b) du procédé selon l'invention, la fraction des matériaux ultra légers contaminants (b1) extraite de la zone de séparation aéraulique peut être soumise à une étape supplémentaire de séparation par criblage selon leur plus grande dimension et/ou leur facteur de forme pour réaliser la séparation d'une fraction formée de matériaux de dimensions inférieures à celle de la maille du crible telles que des poudres de polymères, des déchets de fils et/ou de films, de petits volumes de mousses et d'une fraction formée de tous les flocons de mousses ne pouvant passer à travers les mailles du crible et les valoriser par une opération appropriée telle qu'une glycolyse, agglomération mécanique avec ajout d'un liant, ou un broyage cryogénique pour produire des charges (filler) organiques destinées à être introduites dans des articles réalisés au moyen de polymères thermoplastiques ou thermodurcissables.

### Etape c) du procédé selon l'invention

La fraction (b3) des matériaux polymères à valoriser provenant de l'étape b) de séparation aéraulique du procédé selon l'invention, qui contient encore des matériaux contaminants inclus, adhérants ou assemblés aux matériaux polymères à valoriser, est introduite dans l'étape c) du procédé selon l'invention. Cette étape c) consiste en un broyage fin de ladite fraction à valoriser pour atteindre au moins la maille de libération des matériaux contaminants inclus dans les matériaux polymères à valoriser, afin de libérer lesdits matériaux polymères de tous les matériaux contaminants, adhérants, assemblés ou inclus. Cette étape de broyage à au moins la maille de libération des matériaux contaminants conduit à la réalisation et à l'obtention d'une nécessaire fragmentation fine donnant des particules de polymères à valoriser ayant leur plus grande dimensions au plus égale à 50 mm, de préférence au plus égale à 25 mm, et très préférentiellement comprise entre 1 mm et 15 mm.

Le broyage de l'étape c) du procédé selon l'invention peut s'effectuer en continu dans des broyeurs appropriés, connus de l'homme de métier.

### Etape d) du procédé selon l'invention

A la sortie de l'étape c) de broyage fin, le flux de matériaux broyés formé de matériaux polymères valorisables et de matériaux contaminants libérés par le broyage et qui doivent être éliminés, entre dans une étape d) de séparation mécanique par criblage et/ou de séparation aéraulique par flux gazeux. Toutefois, si la libération par broyage des matériaux contaminants rigides ne créé pas une situation de séparation ultérieure délicate, il n'en est pas de même des matériaux souples, en particulier les mousses polymères qui, lors du broyage, sont soumises à un phénomène de compression, c'est-à-dire de réduction de volume. A la sortie de l'étape c) de broyage fin, les particules de mousses comprimées ont tendance à reprendre leur volume initial par repos, et dès lors qu'elles sont relâchées, prennent un facteur de forme différent de celui des matériaux rigides valorisables que sont les fragments de polymères finement broyés.
Toutefois, le flux des matériaux finement broyés provenant de l'étape c) du procédé selon l'invention peut manifester un état de siccité variable qui, selon que le flux de matériaux provenant de l'étape c) est plutôt sec ou humide, peut avoir une incidence sur l'étape d) finale du procédé selon l'invention, la valeur seuil du taux d'humidité seuil entre l'état sec et l'état humide étant de au plus 20% en poids.

Dans le cas où le flux des matériaux finement broyés provenant de l'étape c) est relativement sec, la séparation des diverses fractions ultra légères, légères et lourdes de ce flux est de type aéraulique et peut se pratiquer par aspiration et/ou soufflage dans une zone de séparation aéraulique comprenant au moins un moyen de séparation aéraulique fonctionnant par insufflation et/ou par aspiration d'un flux gazeux, cette zone comportant une entrée du mélange des matériaux à séparer et trois sorties permettant l'extraction d'une fraction (d1) de matériaux polymères ultra légers et/ou expansés à éliminer, d'une fraction (d2) consistant en des matériaux lourds contaminants à éliminer et d'une fraction (d3) formée des matériaux polymères à valoriser. Cette dernière fraction (d3) constitue le flux de matériaux valorisables préconcentré résultant du procédé selon l'invention, contenant préférentiellement environ au moins 85 % en poids de matériaux valorisables et au plus 15 % en poids de matériaux contaminants.

Dans le cas où la zone de séparation aéraulique de l'étape d) du procédé selon l'invention comporte un seul moyen de séparation aéraulique, ce moyen de séparation comporte lui même au moins deux zones spécifiques de séparation des matériaux à séparer. L'une des zones spécifiques de séparation aéraulique est la zone qui permet simultanément l'alimentation en matériaux à séparer dont le flux entrant est soumis au cours de son introduction dans ladite zone à une séparation aéraulique précoce et à une sortie immédiate du moyen de séparation par flux gazeux de la fraction (d1) des matériaux ultra légers à éliminer. L'autre zone spécifique de séparation aéraulique, munie d'une surface de criblage et également soumise à un flux gazeux, traite le mélange des fractions des matériaux (d2) lourds et contaminants et des matériaux (d3) valorisables provenant de la première zone spécifique, le flux gazeux séparant et entraînant vers une sortie du séparateur aéraulique la fraction (d3) des matériaux valorisables, tandis que la fraction (d2) des matériaux lourds contaminants se sépare de la fraction (d3) par gravité et est éliminée du moyen de séparation aéraulique par une sortie appropriée. Un tel moyen de séparation aéraulique ou séparateur aéraulique à deux zones spécifiques de séparation peut être choisi dans le groupe constitué par les séparateurs-nettoyeurs-calibreurs modulaires comportant des cribles et une double aspiration : un séparateur aéraulique de ce type est commercialisé, par exemple, par la société WESTRUP.

Dans le cas où la zone de séparation aéraulique de l'étape d) du procédé selon l'invention se compose de deux moyens de séparation aérauliques, lesdits moyens de séparation sont dès lors montés en série de telle manière qu'une sortie au moins des fractions des matériaux contaminants (d1) et (d2) se trouve sur le premier moyen de séparation aéraulique.

Selon une variante relative à la présence de deux moyens de séparation aérauliques par flux gazeux dans la zone de séparation aéraulique, le premier moyen de séparation aéraulique qui reçoit le flux entrant de matériaux à séparer en fractions de matériaux contaminants et valorisables provenant de l'étape c), traite ce flux en deux fractions, de telle sorte que la fraction des matériaux ultra légers (d1) est extraite par la partie supérieure du premier moyen de séparation aéraulique, tandis qu'un mélange des fractions de matériaux lourds contaminants (d2) et des matériaux à valoriser (d3) est extraite par la partie basse dudit moyen de séparation aéraulique. Ce mélange des fractions des matériaux lourds contaminants (d2) et des matériaux à valoriser (d3) est introduit dans le deuxième moyen de séparation aéraulique, la fraction des matériaux lourds (d2) contaminants étant éliminée par la partie basse du deuxième moyen de séparation aéraulique tandis que la fraction (d3) des matériaux à valoriser est extraite de l'étape d) et peut subir encore une étape supplémentaire d'élimination de matériaux contaminants.

Selon une autre variante relative à la présence de deux moyens de séparation aérauliques à flux gazeux dans la zone de séparation aéraulique, le premier moyen de séparation qui reçoit le flux entrant de matériaux à séparer en fractions de matériaux contaminants et valorisables provenant de l'étape c) traite le flux en deux fractions de telle sorte que la fraction des matériaux lourds contaminants (d2) est extraite par la partie basse dudit moyen de séparation aéraulique tandis qu'un mélange des fractions des matériaux ultra légers contaminants (d1) et des matériaux valorisables (d3) est extrait par la partie supérieure du premier moyen de séparation aéraulique. Ce mélange des fractions de matériaux ultra légers contaminants (d1) et de matériaux valorisables (d3) est introduit dans le deuxième moyen de séparation aéraulique, la fraction des matériaux ultra légers contaminants (d1) étant éliminée par la partie supérieure du deuxième moyen de séparation aéraulique, tandis que la fraction des matériaux valorisables (d3) est extraite par la partie inférieure dudit moyen de séparation.

Que soit pratiquée l'utilisation d'un ou plusieurs moyens de séparation aérauliques, dans l'étape d) du procédé selon l'invention, la fraction des matériaux ultra légers contaminants (d1) extraite de la zone de séparation aéraulique peut être soumise à une étape supplémentaire de séparation par criblage selon leur plus grande dimension et/ou leur facteur de forme pour réaliser la séparation d'une fraction formée de matériaux de dimensions inférieures à celle de la maille du crible telles que des poudres de polymères, des déchets de fils et/ou de films, de petits volumes de mousses et pour récupérer tous les flocons de mousses ne pouvant passer à travers les mailles du crible et les valoriser par une opération appropriée telle qu'une glycolyse, agglomération mécanique avec ajout d'un liant, ou un broyage cryogénique pour produire des charges (filler) organiques destinées à être introduites dans des articles réalisés au moyen de polymères thermoplastiques ou thermodurcissables.

Dans le cas où le flux des matériaux finement broyés provenant de l'étape c) est relativement humide, c'est-à-dire contenant plus de 20 % en poids d'eau, la séparation mécanique par criblage et/ou facteur de forme peut être réalisée par l'intermédiaire d'un dispositif comportant un moyen de criblage tel qu'une grille à maille calibrée de séparation, adaptée aux matériaux dont on recherche la séparation et plus particulièrement à la forme des fragments valorisables.

Un moyen de criblage adapté à la réalisation de l'étape de séparation peut être choisi parmi les dispositifs munis d'un tambour rotatif à mailles calibrées ou munis d'une grille vibrante à mailles calibrées ou de tout autre dispositif muni d'un moyen de séparation calibrée : la plus grande dimension de la maille calibrée, est généralement d'au plus 25 mm et préférentiellement comprise entre 1 mm et 10 mm.

Lors de la réalisation de l'étape d), une séparation mécanique par criblage calibré peut se faire, par exemple, au moyen d'un « trommel » à surface de séparation cylindrique, à axe de révolution faiblement incliné, la maille calibrée de la surface destinée à la séparation étant formée par des barreaux disposés selon des génératrices et prenant appui sur des structures circulaires coaxiales à l'axe de révolution de ladite surface : la maille calibrée se définit par l'espace libre délimité par deux barreaux et deux structures circulaires contiguës de telle sorte que :
✔ seules les fractions de polymères valorisables se présentant sous la forme de plaquettes passent dans cet espace libre en entraînant le minimum de matériaux contaminants dont la plus grande dimension est inférieure à la distance entre deux barreaux, ces matériaux contaminants étant des mousses, des morceaux de bois et autres,
✔ les fractions de matériaux contaminants à facteur de forme différent de celui ou de ceux des fractions polymères valorisables ou encore dont la plus grande dimension est au moins égale à la distance entre deux barreaux, sont retenues par la maille de tri que constituent les barreaux et les structures annulaires précédemment évoquées : ces matériaux contaminants ainsi éliminés sont essentiellement des mousses, des déchets de bois, du caoutchouc alvéolaire et autres matériaux.

Cette étape de séparation mécanique par criblage et/ou facteur de forme permet l'élimination d'une fraction importante des mousses polymères et des autres matériaux contaminants tels que films et fils polymères, morceaux de bois.

A l'issue de cette séparation mécanique par criblage, la fraction des matériaux polymères valorisables extraite du procédé de traitement selon l'invention constitue la fraction pré-concentrée en matériaux valorisables atteignant préférentiellement au moins 85 % en poids de polymères de synthèse recyclés à valoriser.

La fraction issue de l'étape d), pré-concentrée en matériaux polymères de synthèse à valoriser, qui est formée d'un mélange de polymères de synthèse de diverses origines; telles que polyoléfines, chlorure de polyvinyle, polystyrène, polyamide, polyesters, polyuréthane ou autres polymères, dont certains peuvent contenir une charge minérale, peut subir à la sortie du procédé de pré-concentration une séparation par densité en milieu aqueux pour réaliser une sélection de deux fractions de polymères à valoriser délimitée par un seuil de densité choisi « ds », par exemple de 1,1, la première fraction ayant une densité inférieure à ds et la deuxième fraction ayant une densité supérieure ou égale à ds. Selon ce seuil ds de densité de séparation, la première fraction séparée est formée d'un mélange de matériaux polymères valorisables en milieu aqueux ayant, pour chacun d'entre eux, une densité inférieure à la valeur ds choisie comme seuil de séparation des deux fractions : cette première fraction peut contenir par exemple des polyoléfines, des polystyrènes, des élastomères ou autres. L'autre fraction, quant à elle, est formée d'un mélange de matériaux polymères valorisables ayant, pour chacun d'entre eux, une densité au moins égale à la valeur ds choisie comme seuil de séparation, cette autre deuxième fraction contenant tous les matériaux polymères valorisables refusés dans la première fraction.

Ainsi, cette méthode de séparation de deux fractions de matériaux polymères valorisables en mélange, pour réaliser une sélection délimitée par un seuil de densité ds choisi, permet l'obtention de deux fractions rendues distinctes par leur densité et constituant chacune une fraction préconcentrée en matériaux valorisables selon les besoins industriels. Chaque fraction de polymères de synthèse à valoriser doit alimenter par la suite des procédés de séparation sélective très fine permettant d'extraire chacun des polymères séparément, par exemple une fraction de polyéthylène, une fraction de polypropylène, une fraction de polystyrène, une fraction de chlorure de polyvinyle, une fraction de polyamide et autres fractions, ces séparations sélectives et fines n'entrant pas dans l'objet du procédé de pré-concentration selon l'invention.

Dès lors, le procédé selon l'invention qui comporte une étape de sélection par une séparation par densité en milieu aqueux ou seuil ds choisi de deux fractions de polymères valorisables, à partir du flux d3) provenant de l'étape d), conduit ainsi à la création de deux fractions préconcentrées en matériaux polymères présélectionnés valorisables, contenant encore des matériaux contaminants.

Ainsi, selon l'invention, le procédé de traitement d'un mélange de matériaux issus de résidus de broyage d'articles consommables en fin de vie se présentant sous une forme fragmentée, , pour pré-concentrer ce mélange en matériaux valorisables et en éliminer au moins pour partie les matériaux contaminant les matériaux valorisables, ledit mélange à traiter comprenant :
✔ une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
✔ des fractions de matériaux contaminants formés de matériaux minéraux et/ou de matériaux métalliques et/ou de matériaux organiques autres que les matériaux polymères non expansés et/ou des matériaux polymères de synthèse dans un état expansé,
se caractérise en ce qu'il comporte :
a) une première étape de séparation mécanique par criblage et/ou facteur de forme pour extraire au moins pour partie la fraction des matériaux minéraux contaminants du mélange des matériaux fragmentés,
b) une étape de séparation aéraulique, par flux gazeux, comportant une entrée du mélange de matériaux provenant de l'étape a) débarrassé au moins pour partie de la fraction des matériaux minéraux et trois sorties pour l'extraction de fractions de matériaux séparés dont la première fraction (b1) consiste en une fraction de matériaux polymères de synthèse ultra légers et/ou expansés, la deuxième fraction (b2) consiste en une fraction de matériaux lourds présents dans le mélange et la troisième fraction (b3) consiste en une fraction des matériaux polymères de synthèse à valoriser se présentant sous une forme fragmentée allant d'un état rigide à un état souple,
c) une étape de broyage de la fraction (b3) des matériaux polymères à valoriser provenant de l'étape b), à la maille de libération des matériaux contaminants inclus, adhérants ou assemblés aux fragments de la fraction des matériaux polymères à valoriser,
d) une seconde étape de séparation mécanique par criblage et/ou séparation aéraulique par flux gazeux, de la fraction des matériaux polymères de synthèse à valoriser provenant de l'étape c) de broyage pour en éliminer au moins pour partie la fraction des matériaux contaminants libérés lors du broyage et en extraire la fraction des matériaux valorisables constituant le mélange souhaité, pré-concentré en matériaux valorisables, contenant encore des contaminants.
e) une étape de séparation par densité en milieu aqueux de la fraction des matériaux valorisables provenant de l'étape d) à un seuil de densité ds choisi pour permettre l'obtention de deux fractions de matériaux valorisables présélectionnées selon le seuil de densité ds choisi, et préconcentrées en matériaux valorisables contenant encore des matériaux contaminants.

Le procédé de pré-concentration selon l'invention de fractions de matériaux organiques de synthèse tel qu'il est développé dans le cadre de l'invention s'adapte à tout système de broyage de véhicules automobiles et/ou d'autres biens de consommation durables arrivés en fin de vie, quelle que soit la technologie de broyage.

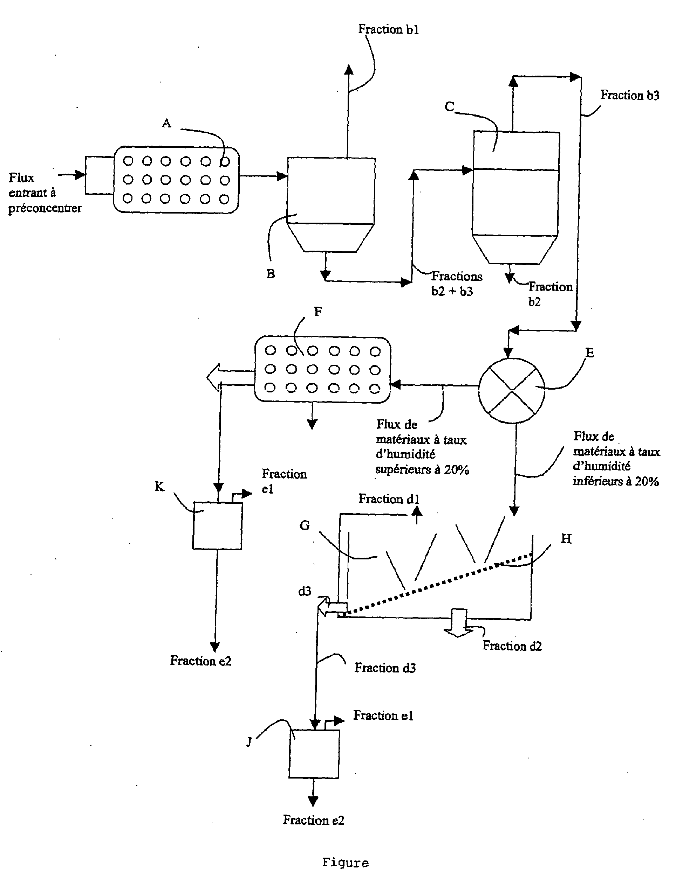

L'invention sera mieux comprise grâce aux exemples cités à titre illustratif et au schéma représentatif (figure 1) du procédé de pré-concentration mis en oeuvre dans le cadre des exemples.

### Exemples

Sur un site de broyage industriel de véhicules automobiles en fin de vie, et après séparation de la fraction formée des divers métaux à récupérer, deux flux de matériaux issus de cette séparation et contenant des matériaux polymères de synthèse à valoriser et des matériaux contaminants à éliminer sont disponibles pour être soumis au procédé de pré-concentration selon l'invention. Il s'agit d'un flux (I) formé d'une fraction lourde et d'un flux (II), formé d'une fraction de matériaux légers.

La composition des deux fractions constituant les deux flux entrants apparaissent dans les tableaux ci-après. Les teneurs sont données en % en poids.

### Composition de la fraction lourde une fois les métaux ferreux et non ferreux retirés - flux (I)

| Matériaux | Composition et granulométrie | Teneur (%) |
|---|---|---|
| Polymères | Tous types sous quelque forme de plaquette et fragment, thermoplastique et thermodurcissables. | 19 |
| Caoutchouc et élastomères | Morceaux de pneumatique (45%) Tous types de joints (55%). | 55 |
| Métaux | Fragment de Ferreux et Non Ferreux. | 5 |
| Bois | | 7 |

| Matériaux | Composition et granulométrie | Teneur (%) |
|---|---|---|
| Textiles | Pièces de faibles dimensions. | 3 |
| Fils de cuivre | Cables (5 à 15 cm). | 3 |
| Minéraux | Pierre et gravier, allant jusqu'à des poids de 100 - 500 g par pierre. | 8 |

### Composition de la fraction légère, « fluff » extraite par aspiration - flux (II)

| Matériaux | Composition et granulométrie | Teneur (%) |
|---|---|---|
| Polymères | Tous types sous quelque forme de plaquette et fragment, thermoplastique et thermodurcissables de 2 à 10 cm de dimension. | 9 |
| Mousse PU | 10/10 - 20/20 cm. | 8 |
| Caoutchouc et élastomères | Pièces longues tels que joints, absence de composants issus des pneumatiques. | 3 |
| Métaux | Fils / plaquettes d'aluminium et autre. | 2.5 |
| Fils de cuivre | Longueur: 10 - 20 cm. | 1 |
| Bois | Pièces de dimensions 10 - 20 cm. | 1 |
| Mélange PU et textiles | Textiles, moquettes, simili cuir... | 32.5 |
| Minéraux | Pierres, sable, verre, poussières, terre... | 43 |

Il doit être compris que suivant les types de technologie utilisées pour la séparation des flux (I) et (II), la composition donnée est une moyenne qui varie suivant les types de compositions de produits à broyés considérés, à savoir automobile en fin de vie et biens durables de consommation tels que produits blancs.

### Exemple 1 (selon la figure)

Un essai a été fait sur 23,4 tonnes du flux léger (II) ou « fluff » en provenance d'un broyeur automobile. Ce « fluff » correspond à ce qui est extrait par première aspiration du broyeur et constitue le flux entrant dans le procédé de pré-concentration tel que développé dans le cadre de l'invention.

Selon l'étape a) du procédé selon l'invention, le flux entrant de matériaux a tout d'abord été soumis à une séparation mécanique par criblage et/ou facteur de forme en (A) de manière sélective afin de retirer 3,68 tonnes représentant 15% en poids du flux entrant. Les mailles du crible étaient de 0-4 mm.

Selon l'étape b) du procédé, le flux de matériaux venant de l'étape a), a été soumis à séparation par tri aéraulique dans un premier séparateur aéraulique (B). 10,14 tonnes de « légers » constituant la fraction b1) ont ainsi été extraites, par aspiration et 9,58 tonnes correspondant aux fractions b2) et b3) sont restées et sont considérées comme « lourds » soit respectivement 43,3 % de « légers » et 40,9 % de « lourds ». Presque toutes les mousses (99 %) ont été aspirées dans la fraction b1) des légers.

Ces 9,58 tonnes ont été passées dans un deuxième séparateur de tri aéraulique (C) et la fraction b3) des matériaux polymères de synthèse extraites représentent une masse de 4,1 tonnes soit 17,5 % par rapport au total de départ. Cette fraction est considérée comme relativement propre. Quant à la fraction b2) constituée de matériaux contaminants tels que des métaux caoutchoucs, minéraux, bois et autres, elle représentait une masse de 5,48 tonnes qui a été extraite par la base du deuxième séparateur aéraulique.

Selon l'étape c) du procédé, les 4,1 tonnes de la fraction b3) ont été fragmentées dans la zone de broyage (E), le broyage s'effectuant sur une grille de 25 mm.

A la sortie de la zone de broyage (E), les 4,1 tonnes ont alimenté une zone de séparation aéraulique par flux gazeux (aspiration) comportant également un moyen de criblage (H) permettant une séparation très efficace par leur facteur de forme des mousses polymères libérées au broyage dans la zone (E) : (dispositif de séparation modulaire commercialisé par la société WESTRUP).

De cette zone de séparation aéraulique et de criblage :
✔ une fraction (d3) représentant 2,4 tonnes de matériaux polymères de synthèse valorisables, essentiellement des thermoplastiques et un peu de thermodurcissables, a été extraite sous forme de paillettes, de plaquettes et autres broyats représentant 10,3 % en poids de la masse totale du flux entrant dans le procédé selon l'invention ;
✔ une fraction (d2) représentant 0,22 tonnes de matériaux contaminants lourds formée de fragments de bois, de métaux et de morceaux de fils électriques a été éliminée par criblage, représentant 0,9 % en poids de la masse totale du flux entrant dans le procédé selon l'invention ;
✔ une fraction (d1) représentant 1,48 tonnes de matériaux également valorisables a été séparée par aspiration comprenant des mousses résiduelles de polymères, des caoutchoucs fins, des matériaux polymères thermoplastiques et thermodurcissables, sous forme de poudre de paillettes, de plaquettes, représentant 6,3 % en poids de la masse totale du flux entrant dans le procédé selon l'invention ;
✔ le taux de concentration en matériaux polymères de synthèse est passé, grâce au procédé de pré-traitement, d'environ 10 % en poids de la masse totale du flux entrant dans le procédé, à environ 90 % en poids dans la fraction des polymères de synthèse valorisable issue du procédé de pré-concentration.

Il est possible de transformer en deux fractions de polymères de synthèses valorisables préconcentrées et présélectionnées, la fraction d3, mélange de polymères de synthèse valorisables sortant de l'étape d) par traitement de cette fraction, dans une étape de séparation par densité en milieu aqueux (j) à un seuil de densité choisi ds = 1,1. Cette séparation par un seuil de densité à 1,1 permet d'obtenir une première fraction e1 de densité inférieure à 1,1 contenant en particulier les polyéthylène, polypropylène, polystyrène et autres matériaux polymères, et une autre fraction e2 de densité supérieure ou égale à 1,1 formée d'un mélange de matériaux polymères valorisables, tels que les polyuréthanes, des polyamides, des polyesters insaturés ou saturés, des polyoléfines chargées et autres.

Les matériaux polymères de synthèse présents dans ce préconcentré comportent des polychlorure de vinyle (PVC), à la fois rigides et souples, mais plus certainement des rigides, des polypropylènes (PP) de densité = 0,9 des polyéthylènes haute densité (PEHD) et basse densité (PEBD), de densité = 0,92 à 0,95, des copolymères - éthylène-vinyle-acétate (EVA), copolymères-éthylènes-propylènes, éthylène-propylène-caoutchouc (EPR), éthylène-propylène-diène-monomère (EPDM), des mousses de polyéthylène (PE), des mousses de polypropylène (PP), des polyoléfines chargées ayant des densités > 1, des polypropylènes (PP) chargés de 20 % talc, de densité = 1,05, des polypropylènes (PP) chargés talc à 30 %, polyéthylène (PE) chargé, des acrylonitriles butadiène styrène (ABS) non chargés de densité= 1,07, du polystyrène (PS) non chargé de densité = 1,05, des polycarbonates (PC), des polyamides (PA), , PA6 densité = 1,13, PA6,6 densité = 1,14, PA6,10 densité = 1,08, PA11 densité = 1,04, PA12 densité = 1,02, chargés ou non chargés, ( fibre de verre ou de minéraux), des polyméthyle méthacrylate, (PMMA) de densité = 1,18, des polyesters insaturés (PET) de densité = 1,10 à 1,3), des polyesters saturés (PET) de densité = 1,2, chargés ou non chargés en fibres de verre, des polyuréthannes (PU) chargés de densité = 1,21) rigides ou semi-rigides, des caoutchoucs, et autres élastomères.

Les mousses polyuréthannes (PU) de densité = 0,02 à 0,035 ne sont pratiquement pas présente dans cette fraction concentrée car elles ont été extraites séparément.

### Exemple 2 (selon la figure)

Un traitement conforme au procédé de préconcentration selon l'invention a été fait sur 33,94 tonnes d'un flux II de matériaux légers et sur 19,96 tonnes d'un flux I de matériaux lourds formés d'un mélange de métaux non ferreux et de matières polymères.

Le mélange de ces deux flux lourd I et léger II représente 53,9 tonnes constituant le flux entrant dans le procédé de préconcentration.

Selon l'étape a) du procédé selon l'invention, le flux entrant a tout d'abord été soumis à une séparation mécanique par criblage et/ou facteur de forme en (A) de manière sélective afin de retirer 8,6 tonnes de fines, soit 15,94 %. Les mailles du crible étaient de 0-4 mm.

Selon l'étape b) du procédé, le flux de matériaux venant de l'étape a), c'est-à-dire 45,35 tonnes, a été soumis à séparation par tri aéraulique dans un premier séparateur aéraulique (B). 8,54 tonnes d'une fraction b1 de « légers » ont ainsi été extraites, par aspiration et 36,76 tonnes sont restées et sont considérées comme « lourds » formant un mélange des fractions b2) et b3) soit respectivement 15,8 % de « légers » et 68,2 % de « lourds ». Presque toutes les mousses (99 %) ont été aspirées dans la fraction des légers.

Les 36,76 tonnes ont été passées dans un deuxième séparateur de tri aéraulique (C) et la fraction des matériaux polymères de synthèse extraite b3) s'est montée à 16,9 tonnes soit 31,35 % par rapport au total de départ. Cette fraction b3) est la fraction contenant l'essentiel des matériaux polymères valorisables. L'autre fraction formée pour l'essentiel de matériaux contaminants métalliques représentait 19,86 tonnes, soit 36,85% en poids par rapport au total de départ.

Selon l'étape c) du procédé, les 16,9 tonnes de la fraction des matériaux polymères de synthèse b3) ont été fragmentées dans la zone de broyage (E), le broyage s'effectuant sur une grille de 25 mm.

A la sortie de la zone de broyage (E), les 16,9 tonnes de matériaux broyés ont alimenté une zone de séparation mécanique par criblage ou à facteur de forme (F) permettant une séparation très efficace par leur facteur de forme des mousses polymères libérées au broyage dans la zone (E).

De cette zone de séparation mécanique par criblage et/ou facteur de forme (F) :
✔ 8,36 tonnes d'une fraction formée par le mélange de fractions (d2) et (d3) formé de matériaux polymères de synthèse valorisables, essentiellement des thermoplastiques et un peu de thermodurcissables et de quelques matériaux contaminants lourds, ont été extraits sous forme de paillettes ,de plaquettes et autres broyats représentant 15,5 % en poids de la masse totale du flux entrant dans le procédé selon l'invention ;
✔ 8,45 tonnes d'une fraction (d1) de matériaux contaminants ultra légers, ont été éliminées.

A l'issue de cette séparation mécanique par criblage, la fraction des matériaux à valoriser d3 est soumise à une étape (J) de séparation hydraulique dans une milieu aqueux ayant une densité de 1,1, seuil de densité ds choisi pour permettre une sélection selon deux fractions préconcentrées des matériaux polymères de synthèse à valoriser. La fraction (e1) des matériaux polymères valorisables extraite du procédé de traitement selon l'invention, parce que de densité inférieure à 1,1, représente 5,86 tonnes constitue une fraction préconcentrée et présélectionnée en matériaux polymères valorisables atteignant 90 % de polymères de synthèse recyclés à valoriser. Cette fraction est essentiellement formée par des matériaux polymères recyclables, tels que polypropylène, polyéthylène, polypropylène chargé talc, polystyrène et ABS.

L'autre fraction e2, séparée, de 1,13 tonnes parce qu'ayant une densité supérieure à 1,1 représente les autres matériaux polymères valorisables ayant été écartés de la fraction e1.

## Revendications

1. Procédé de traitement d'un mélange de matériaux issus d'un résidu de broyage d'articles consommables en fin de vie se présentant sous une forme fragmentée, , pour pré-concentrer ce mélange en matériaux valorisables et en éliminer au moins pour partie les matériaux contaminant les matériaux valorisables, ledit mélange à traiter comprenant :
✔ une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
✔ des fractions de matériaux contaminants formés de matériaux minéraux et/ou de matériaux métalliques et/ou de matériaux organiques autres que les matériaux polymères non expansés et/ou des matériaux polymères de synthèse dans un état expansé,
**caractérisé en ce qu'**il comporte :
a) une première étape de séparation mécanique par criblage et/ou facteur de forme pour extraire au moins pour partie la fraction des matériaux minéraux contaminants du mélange des matériaux fragmentés,
b) une étape de séparation aéraulique, par flux gazeux, comportant une entrée du mélange de matériaux provenant de l'étape a) débarrassé au moins pour partie de la fraction des matériaux minéraux et trois sorties pour l'extraction de fractions de matériaux séparés dont la première fraction (b1) consiste en une fraction de matériaux polymères de synthèse ultra légers et/ou expansés, la deuxième fraction (b2) consiste en une fraction de matériaux lourds présents dans le mélange et la troisième fraction (b3) consiste en une fraction des matériaux polymères de synthèse à valoriser se présentant sous une forme fragmentée allant d'un état rigide à un état souple,
c) une étape de broyage de la fraction (b3) des matériaux polymères à valoriser provenant de l'étape b), à la maille de libération des matériaux contaminants inclus, adhérants ou assemblés aux fragments de la fraction des matériaux polymères à valoriser,
d) une seconde étape de séparation mécanique par criblage et/ou séparation aéraulique par flux gazeux, de la fraction des matériaux polymères de synthèse à valoriser provenant de l'étape c) de broyage pour en éliminer au moins pour partie la fraction des matériaux contaminants libérés lors du broyage et en extraire la fraction des matériau valorisables constituant le mélange souhaité, préconcentré en matériaux valorisables, contenant encore des contaminants.

2. Procédé selon la revendication 1, **caractérisé en ce que,** une étape de séparation par densité en milieu aqueux de la fraction des matériaux valorisables provenant de l'étape d) est établie, cette séparation s'effectuant selon un seuil de densité « ds » choisi pour permettre l'obtention de deux fractions de matériaux valorisables présélectionnées selon ledit seuil « ds » et préconcentrées en matériaux valorisables contenant encore des matériaux contaminants.

3. Procédé selon l'une des revendications 1 ou 2, **caractérisé en ce que** le mélange de matériaux à traiter contient en tant que matériaux valorisables à préconcentrer des matériaux polymères de synthèse thermoplastiques et thermodurs non expansés présents dans des objets parvenus en fin de vie et résultant d'un broyage destructif.

4. Procédé selon l'une quelconque des revendications 1 à 3, **caractérisé en ce que** les matériaux valorisables se présentent sous la forme de fragments dont la plus grande dimension est au plus de 250 mm et préférentiellement d'au plus 200 mm.

5. Procédé selon l'une quelconque des revendications 1 à 4, **caractérisé en ce que** le mélange des matériaux à traiter est soumis à une séparation par criblage et/ou par facteur de forme selon l'étape (d), la maille de criblage ayant sa plus grande dimension au plus égale à 25 mm et préférentiellement comprise entre 1 et 15 mm.

6. Procédé selon la revendication 5, **caractérisé en ce que** la séparation par criblage et/ou facteur de forme se fait dans un dispositif à mailles calibrées de séparation choisi dans le groupe constitué par les dispositifs à grille vibrantes ou à surface de séparation cylindrique en rotation.

7. Procédé selon l'une quelconque des revendications 1 à 6, **caractérisé en ce que** les matériaux valorisables provenant de l'étape (a) débarassée pour partie des matériaux contaminants sont soumis à une séparation aéraulique par aspiration et/ou soufflage dans un seul moyen de séparation aéraulique comportant au moins deux zones de séparation aéraulique spécifique, la première zone spécifique de séparation aéraulique étant simultanément la zone d'alimentation dudit moyen de séparation aéraulique en un flux de matériaux à séparer qui est soumis, au cours de son introduction dans ladite zone, à une séparation aéraulique précoce par flux gazeux avec séparation immédiate de la fraction (b1) des matériaux ultra légers à éliminer et la sortie immédiate de ladite fraction (b1) du moyen de séparation aéraulique, l'autre zone spécifique de séparation aéraulique étant munie d'un moyen de criblage et également soumise à un flux gazeux, qui traite le mélange des fractions des matériaux (b2) lourds et contaminants et des matériaux (b3) légers et valorisables provenant de la première zone spécifique, le flux gazeux séparant et entraînant vers une sortie du moyen de séparation aéraulique la fraction (b3) des matériaux légers et valorisables, tandis que la fraction (b2) des matériaux lourds contaminants est séparée de la fraction (b3) par gravité et est éliminée du moyen de séparation aéraulique par une sortie appropriée.

8. Procédé selon la revendication 7, **caractérisé en ce que** le moyen de séparation aéraulique à deux zones de séparation spécifique est choisi dans le groupe constitué par les séparateurs-nettoyeurs-calibraires modulaires comportant des cribles et une double aspiration.

9. Procédé selon l'une quelconque des revendications 1 à 6, **caractérisé en ce que** les matériaux valorisables provenant de l'étape (a) débarassées pour partie des matériaux contaminants sont soumis à une séparation aéraulique par aspiration ou soufflage dans deux moyens de séparation aérauliques montés en série.

10. Procédé selon la revendication 9, **caractérisé en ce que** premier moyen de séparation aéraulique reçoit le flux entrant de matériaux à séparer en fractions de matériaux contaminants et valorisables provenant de l'étape a), traite ce flux en deux fractions, de telle sorte que la fraction des matériaux ultralégers (b1) est extraite par la partie supérieure dudit premier moyen de séparation aéraulique, tandis qu'un mélange des fractions de matériaux lourds contaminants (b2) et des matériaux légers à valoriser (b3) est extrait par la partie basse dudit moyen de séparation aéraulique, puis est introduit dans le deuxième moyen de séparation aéraulique, la fraction des matériaux lourds (b2) contaminants étant éliminée par la partie basse du deuxième moyen de séparation aéraulique tandis que la fraction (b3) des matériaux à valoriser est extraite dudit deuxième moyen de séparation aéraulique.

11. Procédé selon la revendication 9, **caractérisé en ce que** le premier moyen de séparation aéraulique reçoit le flux entrant de matériaux à séparer en fractions de matériaux contaminants et valorisables provenant de l'étape a), traite le flux en deux fractions de telle sorte que la fraction des matériaux lourds contaminants (b2) est extraite par la partie basse dudit moyen de séparation aéraulique tandis qu'un mélange des fractions des matériaux ultra légers contaminants (b1) et des matériaux légers valorisables (b3) est extrait par la partie supérieure du premier moyen de séparation aéraulique, puis ce mélange des fractions (b1) et (b3) est introduit dans le deuxième moyen de séparation aéraulique, la fraction des matériaux ultra légers contaminants (b1) étant éliminée par la partie supérieure dudit deuxième moyen de séparation aéraulique, tandis que la fraction des matériaux légers valorisables (b3) est extraite par la partie inférieure dudit moyen de séparation aéraulique.

12. Procédé selon l'une quelconque des revendications 1 à 11, **caractérisé en ce que** la fraction des matériaux ultra légers contaminants (b1) extraite de la zone de séparation aéraulique est soumise à une étape supplémentaire de séparation par criblage selon leur plus grande dimension et/ou leur facteur de forme pour réaliser la séparation d'une fraction formée de matériaux de dimensions inférieures à celle de la maille du crible telles que des poudres de polymères, des déchets de fils et/ou de films, de petits volumes de mousses et d'une fraction formée de tous les flocons de mousses ne pouvant passer à travers les mailles du crible qui est valorisée par une opération appropriée.

13. Procédé selon l'une quelconque des revendications 1 à 12, **caractérisé en ce que** la fraction b3) des matériaux polymères à valoriser provenant de l'étape b) de séparation aéraulique qui contient encore des matériaux contaminants inclus, adhérants ou assemblés aux matériaux polymères à valoriser, est soumise à une action de broyage fin pour atteindre au moins la maille de libération des matériaux contaminants inclus dans les matériaux polymères à valoriser, pour libérer lesdits matériaux polymères à valoriser de tous les matériaux contaminants.

14. Procédé selon la revendication 13, **caractérisé en ce que** la maille de libération des matériaux contaminants ont au moins une fragmentation fine par broyage donnant des particules de polymères à valoriser ayant leur plus grandes dimension au plus égale à 50 mm, de préférence d'au plus égale à 25 mm, et très préférentiellement d'au plus égale à 15 mm.

15. Procédé selon l'une quelconque des revendications 1 à 14, **caractérisé en ce que,** dans le cas où le flux des matériaux finement broyés provenant de l'étape c) et entrant dans l'étape d) contient au plus 20% en poids d'eau, la séparation des diverses fractions ultra légères, légères et lourdes de ce flux se fait dans une zone de séparation aéraulique comprenant au moins un moyen de séparation aéraulique fonctionnant par insufflation et/ou par aspiration d'un flux gazeux, cette zone comportant une entrée du mélange des matériaux provenant de l'étape c) à séparer et trois sorties permettant l'extraction d'une fraction (d1) de matériaux polymères ultra légers et/ou expansés à éliminer, d'une fraction (d2) consistant en des matériaux lourds contaminants à éliminer et d'une fraction (d3) formée des matériaux polymères à valoriser, cette dernière fraction (d3) constituant le flux de matériaux valorisables pré-concentré.

16. Procédé selon la revendication 15, **caractérisé en ce que,** lorsque la zone de séparation aéraulique de l'étape d) comporte un seul moyen de séparation aéraulique, ce moyen de séparation comportant lui-même au moins deux zones spécifiques de séparation des matériaux à séparer, l'une des zones spécifiques de séparation aéraulique étant la zone qui permet simultanément l'alimentation en matériaux à séparer dont le flux entrant est soumis au cours de son introduction dans ladite zone à une séparation aéraulique précoce et à une sortie immédiate du moyen de séparation aéraulique de la fraction (d1) des matériaux ultra légers à éliminer par l'intermédiaire d'un flux gazeux, l'autre zone spécifique de séparation aéraulique, munie d'une surface de criblage et soumise à un flux gazeux, traitant le mélange des fractions des matériaux (d2) lourds contaminants et des matériaux (d3) légers valorisables provenant de la première zone spécifique, le flux gazeux séparant et entraînant vers une sortie un moyen de séparation aéraulique la fraction (d3) des matériaux légers et valorisables, tandis que la fraction (d2) des matériaux lourds contaminants se sépare de la fraction (d3) par gravité et est éliminée du séparateur aéraulique par une sortie appropriée.

17. Procédé selon la revendication 15, **caractérisé en ce que,** lorsque la zone de séparation comporte deux moyens de séparation aérauliques, lesdits moyens de séparation sont montés en serie de telle manière qu'une sortie au moins des fractions des matériaux contaminants (d1) et (d2) se trouve sur le premier moyen de séparation aéraulique.

18. Procédé selon la revendication 17, **caractérisé en ce que** le premier moyen de séparation aéraulique reçoit le flux entrant de matériaux à séparer en fractions de matériaux contaminants et valorisables provenant de l'étape c), traite ce flux en deux fractions, de telle sorte que la fraction des matériaux ultra légers (d1) est extraite par la partie supérieure du premier moyen de séparation aéraulique, tandis qu'un mélange des fractions de matériaux lourds contaminants (d2) et des matériaux légers à valoriser (d3) est extraite par la partie basse dudit moyen de séparation aéraulique puis ce mélange des fractions (d2) et (d3) est introduit dans le deuxième moyen de séparation aéraulique, la fraction des matériaux lourds (d2) étant éliminée par la partie basse dudit deuxième moyen de séparation aéraulique tandis que la fraction d3) des matériaux à valoriser est extraite de l'étape d) pour former la fraction pré-concentrée en matériaux polymères à valoriser.

19. Procédé selon la revendication 17, **caractérisé en ce que** le premier moyen de séparation qui reçoit le flux entrant de matériaux à séparer en fractions de matériaux contaminants et valorisables provenant de l'étape c) traite le flux en deux fractions de telle sorte que la fraction des matériaux lourds contaminants (d2) est extraite par la partie basse dudit premier moyen de séparation aéraulique, tandis qu'un mélange des fractions des matériaux ultra légers contaminants (d1) et des matériaux valorisables (d3) est extrait par la partie supérieure dudit premier moyen de séparation aéraulique puis ce mélange des fractions de matériaux ultra légers contaminants (d1) et de matériaux valorisables (d3) est introduit dans le deuxième moyen de séparation aéraulique, la fraction des matériaux ultra légers contaminants (d1) étant éliminée par la partie supérieure du deuxième moyen de séparation aéraulique, tandis que la fraction des matériaux valorisables est extraite par la partie inférieure dudit moyen de séparation pour former la fraction pré-concentrée en matériaux polymères à valoriser.

20. Procédé selon l'une quelconque des revendications 1 à 14, **caractérisé en ce que,** dans le cas où le flux des matériaux finement broyés provenant de l'étape c) et entrant dans l'étape d) contient au moins 20% en poids d'eau, une séparation mécanique par criblage et/ou facteur de forme peut être réalisée par l'intermédiaire d'un dispositif comportant un moyen de criblage adapté à la forme des fragments des matériaux valorisables.

21. Procédé selon la revendication 20, **caractérisé en ce que** le moyen de criblage est une grille à maille calibrée de séparation, la plus grande dimension de la maille calibrée étant au plus de 25 mm et préférentiellement d'au plus 10 mm.

22. Procédé selon l'une quelconque des revendications 1 à 21, **caractérisé en ce que** la fraction extraite des matériaux polymères valorisables atteint préférentiellement au moins 85% en poids desdits matériaux polymères valorisables.

23. Utilisation des fractions préconcentrées en matériaux polymères valorisables résultant du procédé de l'une quelconque des revendications 1 à 22 pour alimenter des procédés de séparation sélective permettant l'extraction séparée de chacun des polymères valorisables.

## Claims

1. Method for the treatment of a mixture of materials derived from a residue of crushed end-of-life consumable goods in broken down form, for preconcentrating said mixture into upgradable materials and eliminating at least partly materials which contaminate the upgradable materials, said mixture to be treated comprising:
➢ a fraction of upgradable materials, which are synthetic non-expanded polymer materials, of various nature and/or composition and/or shape factors, which are present in the form of fragments ranging from a rigid state to a flexible state,
➢ fractions of contaminating materials formed by mineral materials and/or metal materials and/or organic materials other than non-expanded polymer materials and/or synthetic polymer materials in an expanded state,
**characterised in that** it comprises:
a) a first stage of mechanical separation by screening and/or shape factor to extract at least partly the fraction of contaminating mineral materials from the mixture of fragmented materials,
b) a stage of aeraulic separation, by gaseous flux, comprising an input of the mixture of materials derived from stage a) which has been cleared at least partly of the fraction of mineral materials and three outlets for the extraction of fractions of separated materials, the first fraction (b1) of which consists of a fraction of synthetic ultra-light and/or expanded polymer materials, and the second fraction (b2) consists of a fraction of heavy materials present in the mixture and the third fraction (b3) consists of a fraction of synthetic polymer materials for upgrading which are present in a fragmented form ranging from a rigid state to a flexible state,
c) a stage of crushing the fraction (b3) of polymer materials to be upgraded which is derived from stage b) at the mesh for releasing the included contaminating materials, adhering or attached to fragments of the fraction of polymer materials to be upgraded,
d) a second stage of mechanical separation by screening and/or aeraulic separation by gaseous flux of the fraction of synthetic polymer materials to be upgraded derived from crushing stage c), to eliminate at least partly the fraction of contaminating materials released during the crushing and extracting the fraction of upgradable materials forming the desired mixture, preconcentrated into upgradable materials still containing contaminants.

2. Method according to claim 1, **characterised in that** a stage of density separation in aqueous medium of the fraction of upgradable materials derived from stage d) is established, said separation being carried out according to a density threshold "ds" selected to make it possible to obtain two fractions of upgradable materials preselected according to said threshold "ds" and preconcentrated into upgradable materials still containing contaminating materials.

3. Method according to any one of claims 1 or 2, **characterised in that** the mixture of materials to be treated contains as the upgradable materials to be preconcentrated synthetic thermoplastic and thermosetting non-expanded polymer materials which are present in objects which have reached the end of their life and result from destructive crushing.

4. Method according to any one of claims 1 to 3, **characterised in that** the upgradable materials are in the form of fragments, the greatest dimension of which is at most 250 mm and preferably at most 200 mm.

5. Method according to any one of claims 1 to 4, **characterised in that** the mixture of materials to be treated is subjected to separation by screening and/or by shape factor according to stage (d), the greatest dimension of the screening mesh being at most 25 mm and preferably between 1 and 15 mm.

6. Method according to claim 5, **characterised in that** the separation by screening and/or shape factor is performed in a device with calibrated separation screens selected from a group comprising devices with a vibrating grill or with a rotationally cylindrical separation surface.

7. Method according to any one of claims 1 to 6, **characterised in that** the upgradable materials derived from stage (a) and cleared in part of contaminating materials are subjected to aeraulic separation by aspiration and/or blowing in a single aeraulic separation means comprising at least two zones of specific aeraulic separation, the first specific zone of aeraulic separation being simultaneously the feed zone of the said means of aeraulic separation in a flux of materials to be separated which is subjected, during its introduction into the said zone, to an early aeraulic separation by gaseous flux with immediate separation of the fraction (b1) of ultra-light materials to be eliminated and the immediate outlet of said fraction (b1) of the aeraulic separation means, the other specific aeraulic separation zone being provided with a means of screening and also subjected to gaseous flux, which treats the mixture of fractions of heavy and contaminating materials (b2) and light and upgradable materials (b3) coming from the first specific zone, the gaseous flux separating and leading towards an outlet of the aeraulic separation means of fraction (b3) of light and upgradable materials, whereas fraction (b2) of heavy contaminating materials is separated from fraction (b3) by gravity and is eliminated from the aeraulic separation means via an appropriate outlet.

8. Method according to claim 7, **characterised in that** the aeraulic separation means with two specific separation zones is selected from a group comprising modular calibration separator-cleaners comprising screens and a double aspiration.

9. Method according to any one of claims 1 to 6, **characterised in that** the upgradable materials derived from stage (a), which are cleared in part of contaminating materials, are subjected to aeraulic separation by aspiration or blowing in two aeraulic separation means mounted in series.

10. Method according to claim 9, **characterised in that** the first aeraulic separation means receives the entering flux of materials to be separated into fractions of contaminating and upgradable materials derived from stage a), treats said flux in two fractions, such that the fraction of ultra-light materials (b1) is extracted via the upper part of said first aeraulic separation means, whereas a mixture of heavy contaminating fractions of materials (b2) and light materials to be upgraded (b3) is extracted via the lower part of said aeraulic separation means, then is introduced into the second aeraulic separation means, the fraction of heavy (b2) contaminating materials being eliminated via the lower part of the second aeraulic separation means, whereas the fraction (b3) of materials to be upgraded is extracted from said second aeraulic separation means.

11. Method according to claim 9, **characterised in that** the first aeraulic separation means receives the flux of materials to be separated in fractions of contaminating and upgradable materials derived from stage a), treats the flux in two fractions such that the fraction of heavy contaminating materials (b2) is extracted via the lower parent of said aeraulic separation means, whereas a mixture of fractions of ultra-light contaminating materials (b1) and light upgradable materials (b3) is extracted via the upper part of the first aeraulic separation means, then this mixture of fractions (b1) and (b3) is introduced into the second aeraulic separation means, the fraction of ultra-light contaminating materials (b1) being eliminated via the upper part of said second aeraulic separation means, whereas the fraction of light upgradable materials (b3) is extracted via the lower part of said aeraulic separation means.

12. Method according to any one of claims 1 to 11, **characterised in that** the fraction of ultra-light contaminating materials (b1) extracted from the aeraulic separation zone is subjected to a supplementary stage of separation by screening according to their largest dimension and/or their shape factor to perform the separation of a fraction formed from materials with smaller dimensions than those of the mesh of the screen, such that polymer powders, waste from wires and/or films, small volumes of expanded plastics and a fraction formed from the flakes of expanded plastics cannot pass through the meshes of the screen which is upgraded by means of a suitable operation.

13. Method according to any one of claims 1 to 12, **characterised in that** the fraction b3) of polymer materials to be upgraded derived from stage b) of aeraulic separation which still contains included contaminating materials, adhering or attached to polymer materials to be upgraded, is subjected to a fine breaking down action to reach at least the releasing mesh of contaminating materials included in the polymer materials to be upgraded, to release said polymer materials to be upgraded of all the contaminating materials.

14. Method according to claim 13, **characterised in that** the mesh for releasing contaminating materials has at least a fine fragmentation by breaking down so that the greatest dimension of particles of polymers to be upgraded is at most 50 mm, preferably at most 25 mm and even more preferably at most 15 mm.

15. Method according to any one of claims 1 to 14, **characterised in that** if the flux of finely broken down materials derived from stage c) and entering into stage d) contains at most 20% by weight water, the separation of various ultra-light, light and heavy fractions of this flux is performed in an aeraulic separation zone comprising at least one aeraulic separation means which functions by insufflation and/or by aspiration of a gaseous flux, said zone comprising an input of the mixture of materials derived from stage c) to be separated and three outlets allowing the extraction of a fraction (d1) of ultra-light polymer materials and/or expanded polymer materials to be eliminated, a fraction (d2) consisting of heavy contaminating materials to be eliminated and a fraction (d3) formed from polymer materials to be upgraded, said last fraction (d3) forming the flux of preconcentrated upgradable materials.

16. Method according to claim 15, **characterised in that** when the aeraulic separation zone of stage d) comprises a single aeraulic separation means, said separation means itself comprises at least two specific zones for separating the materials to be separated, one of the specific aeraulic separation zones being the zone which permits simultaneously the feeding of materials to be separated, the entering flux of which is subjected during its introduction into said zone to an early aeraulic separation and to an immediate outlet of the aeraulic separation means of fraction (d1) of the ultra-light materials to be eliminated by means of a gaseous flux, the other specific zone of aeraulic separation, equipped with a screening surface and subjected to a gaseous flux, treating the mixture of fractions of heavy contaminating materials (d2) and light upgradable materials (d3) derived from the first specific zone, the gaseous flux separating and leading towards an outlet a means for aeraulic separation of fraction (d3) of light and upgradable materials, whereas the fraction (d2) of heavy contaminating materials separates from fraction (d3) by gravity and is eliminated from the aeraulic separator via an appropriate outlet.

17. Method according to claim 15, **characterised in that** when the separation zone comprises two aeraulic separation means, said separation means are mounted in series in such a way that an outlet at least of the fractions of contaminating materials (d1) and (d2) is located on the first aeraulic separation means.

18. Method according to claim 17, **characterised in that** the first aeraulic separation means receives the incoming flux of materials to be separated into fractions of contaminating and upgradable materials derived from stage c), treats said flux in two fractions, such that the fraction of ultra-light materials (d1) is extracted via the upper part of the first aeraulic separation means, whereas a mixture of the fractions of heavy contaminating materials (d2) and light materials to be upgraded (d3) is extracted via the lower part of said aeraulic separation means then this mixture of fractions (d2) and (d3) is introduced into the second aeraulic separation means, the fraction of heavy materials (d2) being eliminated via the lower part of said second aeraulic separation means, whereas the fraction (d3) of materials to be upgraded is extracted from stage d) to form the preconcentrated fraction of polymer materials to be upgraded.

19. Method according to claim 17, **characterised in that** the first separation means which receives the incoming flux of material to be separated into fractions of contaminated and upgradable materials derived from stage c) treats the flux in two fractions, such that the fraction of heavy contaminating materials (d2) is extracted via the lower part of said first aeraulic separation means, whereas a mixture of fractions of ultra-light contaminating materials (d1) and upgradable materials (d3) is extracted via the upper part of said first aeraulic separation means, then this mixture of fractions of ultra-light contaminating materials (d1) and upgradable materials (d3) is introduced into the second aeraulic separation means, the fraction of ultra-light contaminating materials (d1) being eliminated via the upper part of the second aeraulic separation means, whereas the fraction of upgradable materials is extracted via the lower part of said separation means to form the preconcentrated fraction of polymer materials to be upgraded.

20. Method according to any one of claims 1 to 14, **characterised in that** if the flux of finely broken down materials derived from stage c) and entering into stage d) contains at least 20% by weight water, a mechanical separation by screening and/or shape factor can be achieved by means of a device comprising a screening means adapted to the shape of the fragments of upgradable materials.

21. Method according to claim 20, **characterised in that** the screening means is a grill with a calibrated separation mesh, the largest dimension of the calibrated mesh being at most 25 mm and preferably at most 10 mm.

22. Method according to any one of claims 1 to 21, **characterised in that** the extracted fraction of upgradable polymer materials preferably reaches at least 85% by weight of said upgradable polymer materials.

23. Use of preconcentrated fractions of upgradable polymer materials resulting from the method of any one of claims 1 to 22 for feeding the selective separation methods which allow the separate extraction of each of the upgradable polymers.

## Patentansprüche

1. Verfahren zur Aufbereitung eines Gemisches von Materialien, die aus einem Mahlrückstand von in zerstückelter Form vorliegenden Gebrauchsgegenständen am Ende ihres Lebenszyklus stammen, um dieses Gemisch mit verwertbaren Materialien vorzukonzentrieren und daraus wenigstens zum Teil diejenigen Materialien zu entfernen, die die verwertbaren Materialien verunreinigen, wobei das aufzubereitende Gemisch umfasst:
- eine Fraktion verwertbarer Materialien, bei denen es sich um nicht expandierte, synthetische Polymermaterialien verschiedenster Art und/oder Zusammensetzungen und/oder Formfaktoren handelt, die in Gestalt von Stücken starren bis nachgiebigen Zustands vorliegen,
- Fraktionen verunreinigender Materialien, die aus anderen mineralischen Materialien und/oder metallischen Materialien und/oder organischen Materialien bestehen als den nicht expandierten Polymermaterialien und/oder den synthetischen Polymermaterialien in expandiertem Zustand,
**dadurch gekennzeichnet, dass** es umfasst:
a) einen ersten mechanischen Trennschritt mittels Siebung und/oder Formfaktor, um die Fraktion der verunreinigenden mineralischen Materialien wenigstens zum Teil aus dem Gemisch der zerstückelten Materialien zu extrahieren,
b) einen lufttechnischen Trennschritt mittels Gasstrom, mit einem Eingang für das aus dem Schritt a) stammende, wenigstens zum Teil von der Fraktion der mineralischen Materialien befreite Materialgemisch und drei Ausgängen zur Extraktion von Fraktionen abgetrennter Materialien, von denen die erste Fraktion (b1) aus einer Fraktion ultraleichter und/oder expandierter, synthetischer Polymermaterialien besteht, die zweite Fraktion (b2) aus einer Fraktion schwerer, im Gemisch vorhandener Materialien besteht und die dritte Fraktion (b3) aus einer Fraktion zu verwertender synthetischer Polymermaterialien besteht, die in Form von Stücken starren bis nachgiebigen Zustands vorliegen,
c) einen Mahlschritt zum Zermahlen der Fraktion (b3) der zu verwertenden Polymermaterialien aus dem Schritt b) bis auf die Freisetzungsgröße der verunreinigenden Materialien, die in den Stücken der Fraktion der zu verwertenden Polymermaterialien enthalten sind, daran anhaften oder damit verbunden sind,
d) einen zweiten mechanischen Trennschritt mittels Siebung und/oder lufttechnischen Trennschritt mittels Gasstrom zum Abtrennen der Fraktion der zu verwertenden synthetischen Polymermaterialien aus dem Mahlschritt c), um daraus die Fraktion der bei der Mahlung freigesetzten verunreinigenden Materialien wenigstens zum Teil zu entfernen und die Fraktion der verwertbaren Materialien, die das gewünschte, mit verwertbaren Materialien vorkonzentrierte Gemisch darstellt und noch Verunreinigungen enthält, zu extrahieren.

2. Verfahren nach Anspruch 1, **dadurch gekennzeichnet, dass** ein Trennschritt zur Trennung nach Dichte in wässerigem Medium für die Fraktion der verwertbaren Materialien aus dem Schritt d) vorgesehen wird, wobei diese Trennung gemäß einer Dichteschwelle "ds" erfolgt, die so gewählt wird, dass sich zwei gemäß dieser Dichteschwelle "ds" vorausgewählte, mit verwertbaren Materialien vorkonzentrierte Materialfraktionen ergeben, die noch verunreinigende Materialien enthalten.

3. Verfahren nach einem der Ansprüche 1 oder 2, **dadurch gekennzeichnet, dass** das aufzubereitende Materialgemisch als vorzukonzentrierende verwertbare Materialien nicht expandierte, thermoplastische und thermogehärtete, synthetische Polymermaterialien enthält, die in Gegenständen, die am Ende ihres Lebenszyklus angekommen sind, vorhanden sind und aus einer zerstörenden Zerkleinerung resultieren.

4. Verfahren nach irgendeinem der Ansprüche 1 bis 3, **dadurch gekennzeichnet, dass** die verwertbaren Materialien in Form von Stücken vorliegen, deren größte Abmessung höchstens 250 mm und bevorzugt höchstens 200 mm beträgt.

5. Verfahren nach irgendeinem der Ansprüche 1 bis 4, **dadurch gekennzeichnet, dass** das aufzubereitende Materialgemisch einer Trennung mittels Siebung und/oder Formfaktor gemäß Schritt d) unterzogen wird, wobei die größte Abmessung der Siebmasche höchstens 25 mm beträgt und bevorzugt zwischen 1 und 15 mm liegt.

6. Verfahren nach Anspruch 5, **dadurch gekennzeichnet, dass** die Trennung mittels Siebung und/oder Formfaktor in einer Vorrichtung mit kalibrierten Trennmaschen erfolgt, die aus der Gruppe der Vorrichtungen mit Vibrationsrost oder rotierender, zylindrischer Trennfläche gewählt wird.

7. Verfahren nach irgendeinem der Ansprüche 1 bis 6, **dadurch gekennzeichnet, dass** die von den verunreinigenden Materialien zum Teil befreiten verwertbaren Materialien aus dem Schritt a) einer lufttechnischen Trennung unterzogen werden, mittels Absaugen und/oder Abblasen in einem einzigen lufttechnischen Trennmittel, das mindestens zwei spezifische lufttechnische Trennzonen aufweist, wobei die erste spezifische lufttechnische Trennzone gleichzeitig die Zone zur Versorgung des lufttechnischen Trennmittels mit einem abzutrennenden Materialstrom ist, der während seiner Einleitung in diese Zone einer vorzeitigen lufttechnischen Trennung mittels Gasstrom unterzogen wird, mit sofortiger Abtrennung der Fraktion (b1) der zu entfernenden ultraleichten Materialien und sofortigem Austritt dieser Fraktion (b1) aus dem lufttechnischen Trennmittel, die andere spezifische lufttechnische Trennzone mit einem Siebmittel versehen ist und ebenfalls einem Gasstrom ausgesetzt wird, der das Gemisch aus den Fraktionen der schweren und verunreinigenden Materialien (b2) und der leichten und verwertbaren Materialien (b3) aus der ersten spezifischen Zone aufbereitet, wobei der Gasstrom die Fraktion (b3) der leichten und verwertbaren Materialien abtrennt und zu einem Ausgang des lufttechnischen Trennmittels treibt, während die Fraktion (b2) der verunreinigenden schweren Materialien durch Schwerkraft von der Fraktion (b3) getrennt und über einen geeigneten Ausgang aus dem lufttechnischen Trennmittel herausgeführt wird.

8. Verfahren nach Anspruch 7, **dadurch gekennzeichnet, dass** das lufttechnische Trennmittel mit zwei spezifischen Trennzonen aus der Gruppe der modularen Trenn-Reinigungs-Sortieranlagen mit Sieben und Doppelabsaugung gewählt wird.

9. Verfahren nach irgendeinem der Ansprüche 1 bis 6, **dadurch gekennzeichnet, dass** die von den verunreinigenden Materialien zum Teil befreiten verwertbaren Materialien aus dem Schritt a) einer lufttechnischen Trennung mittels Absaugen oder Abblasen in zwei in Serie geschalteten lufttechnischen Trennmitteln unterzogen werden.

10. Verfahren nach Anspruch 9, **dadurch gekennzeichnet, dass** das erste lufttechnische Trennmittel den in Fraktionen verunreinigender und verwertbarer Materialien zu trennenden eintretenden Materialstrom aus Schritt a) empfängt, diesen Strom in zwei Fraktionen so aufbereitet, dass die Fraktion der ultraleichten Materialien (b1) über den oberen Teil des ersten lufttechnischen Trennmittels extrahiert wird, während ein Gemisch aus den Fraktionen der verunreinigenden schweren Materialien (b2) und der zu verwertenden leichten Materialien (b3) über den unteren Teil des lufttechnischen Trennmittels extrahiert und in das zweite lufttechnische Trennmittel eingeleitet wird, wobei die Fraktion der verunreinigenden schweren Materialien (b2) über den unteren Teil des zweiten lufttechnischen Trennmittels entfernt wird, während die Fraktion (b3) der zu verwertenden Materialien aus dem zweiten lufttechnischen Trennmittel extrahiert wird.

11. Verfahren nach Anspruch 9, **dadurch gekennzeichnet, dass** das erste lufttechnische Trennmittel den in Fraktionen verunreinigender und verwertbarer Materialien zu trennenden eingehenden Materialstrom aus Schritt a) empfängt, den Strom in zwei Fraktionen so aufbereitet, dass die Fraktion der verunreinigenden schweren Materialien (b2) über den unteren Teil des lufttechnischen Trennmittels extrahiert wird, während ein Gemisch aus den Fraktionen der verunreinigenden ultraleichten Materialien (b1) und der zu verwertenden leichten Materialien (b3) über den oberen Teil des ersten lufttechnischen Trennmittels extrahiert wird und dieses Gemisch aus den Fraktionen (b1) und (b3) in das zweite lufttechnische Trennmittel eingeleitet wird, wobei die Fraktion der verunreinigenden ultraleichten Materialien (b1) über den oberen Teil des zweiten lufttechnischen Trennmittels entfernt wird, während die Fraktion der verwertbaren leichten Materialien (b3) über den unteren Teil dieses lufttechnischen Trennmittels extrahiert wird.

12. Verfahren nach irgendeinem der Ansprüche 1 bis 11, **dadurch gekennzeichnet, dass** die aus der lufttechnischen Trennzone extrahierte Fraktion der verunreinigenden ultraleichten Materialien (b1) einem zusätzlichen Trennschritt mittels Siebung nach ihrer größten Abmessung und/oder ihrem Formfaktor unterzogen wird, um eine Fraktion aus Materialien mit kleineren Abmessungen als die Siebmasche, wie Polymerpulver, Draht- und Folienabfall, kleine Schaummengen, und eine Fraktion aus all denjenigen Schaumflocken abzutrennen, die nicht durch die Siebmaschen passieren können, welche Fraktion durch einen geeigneten Vorgang verwertet wird.

13. Verfahren nach irgendeinem der Ansprüche 1 bis 12, **dadurch gekennzeichnet, dass** die Fraktion (b3) der zu verwertenden Polymermaterialien aus dem lufttechnischen Trennschritt b), die noch verunreinigende Materialien enthält, die in den zu verwertenden Polymermaterialien enthalten sind, daran anhaften oder damit verbunden sind, einem Feinzerkleinerungsvorgang unterworfen wird, um zumindest die Freisetzungsgröße der in den zu verwertenden Polymermaterialien enthaltenen verunreinigenden Materialien zu erreichen und die zu verwertenden Polymermaterialien von allen verunreinigenden Materialien zu befreien.

14. Verfahren nach Anspruch 13, **dadurch gekennzeichnet, dass** die Freisetzungsgröße der verunreinigenden Materialien mindestens einer feinen Zerkleinerung durch Mahlung entspricht, bei der sich zu verwertende Polymerpartikel ergeben, deren größte Abmessung höchstens 50 mm, bevorzugt höchstens 25 mm und besonders bevorzugt höchstens 15 mm beträgt.

15. Verfahren nach irgendeinem der Ansprüche 1 bis 14, **dadurch gekennzeichnet, dass** wenn der aus dem Schritt c) stammende und in den Schritt d) eintretende Strom der fein zermahlenen Materialien höchstens 20 Gewichtsprozent Wasser enthält, die Trennung der einzelnen ultraleichten, leichten und schweren Fraktionen dieses Stroms in einer lufttechnischen Trennzone erfolgt, die mindestens ein lufttechnisches Trennmittel aufweist, bei dem ein Gasstrom eingeblasen und/oder abgesaugt wird, wobei diese Zone einen Eingang für das Gemisch der zu trennenden Materialien aus dem Schritt c) sowie drei Ausgänge aufweist zur Extraktion einer Fraktion (d1) zu entfernender, ultraleichter und/oder expandierter Polymermaterialien, einer Fraktion (d2), die aus zu entfernenden, verunreinigenden, schweren Materialien besteht, und einer Fraktion (d3) bestehend aus den zu verwertenden Polymermaterialien, wobei die letztgenannte Fraktion (d3) den vorkonzentrierten Strom verwertbarer Materialien darstellt.

16. Verfahren nach Anspruch 15, **dadurch gekennzeichnet, dass** wenn die lufttechnische Trennzone des Schritts d) nur ein lufttechnisches Trennmittel aufweist, dieses Trennmittel selbst mindestens zwei spezifische Trennzonen für die zu trennenden Materialien aufweist, wobei eine der spezifischen lufttechnischen Trennzonen die Zone ist, die gleichzeitig die Versorgung mit den zu trennenden Materialien gestattet, deren eintretender Materialstrom während seiner Einleitung in diese Zone frühzeitig lufttechnisch getrennt und aus dem Trennmittel zur Abtrennung der Fraktion (d1) der über einen Gasstrom zu entfernenden ultraleichten Materialien unverzüglich abgeleitet wird, während die andere spezifische lufttechnische Trennzone, die mit einer Siebfläche versehen ist und einem Gasstrom ausgesetzt wird, das Gemisch aus den Fraktionen der verunreinigenden schweren Materialien (d2) und der verwertbaren leichten Materialien (d3) aus der ersten spezifischen Zone aufbereitet, wobei der Gasstrom die Fraktion (d3) der verwertbaren leichten Materialien abtrennt und zu einem Ausgang des lufttechnischen Trennmittels treibt, während sich die Fraktion (d2) der verunreinigenden schweren Materialien durch Schwerkraft von der Fraktion (d3) abtrennt und über einen geeigneten Ausgang aus dem lufttechnischen Separator herausgeführt wird.

17. Verfahren nach Anspruch 15, **dadurch gekennzeichnet, dass** wenn die Trennzone zwei lufttechnische Trennmittel aufweist, diese Trennmittel in Serie geschaltet sind, derart, dass sich mindestens ein Ausgang für die Fraktionen der verunreinigenden Materialien (d1) und (d2) auf dem ersten lufttechnischen Trennmittel befindet.

18. Verfahren nach Anspruch 17, **dadurch gekennzeichnet, dass** das erste lufttechnische Trennmittel den in Fraktionen verunreinigender und verwertbarer Materialien zu trennenden eintretenden Materialstrom aus Schritt c) empfängt, diesen Strom in zwei Fraktionen so aufbereitet, dass die Fraktion der ultraleichten Materialien (d1) über den oberen Teil des ersten lufttechnischen Trennmittels extrahiert wird, während ein Gemisch aus den Fraktionen der verunreinigenden schweren Materialien (d2) und der zu verwertenden leichten Materialien (d3) über den unteren Teil des lufttechnischen Trennmittels extrahiert wird und dieses Gemisch aus den Fraktionen (d2) und (d3) in das zweite lufttechnische Trennmittel eingeleitet wird, wobei die Fraktion der schweren Materialien (d2) über den unteren Teil des zweiten lufttechnischen Trennmittels entfernt wird, während die Fraktion (d3) der zu verwertenden Materialien aus dem Schritt d) extrahiert wird, um die mit den zu verwertenden Polymermaterialien vorkonzentrierte Fraktion zu bilden.

19. Verfahren nach Anspruch 17, **dadurch gekennzeichnet, dass** das erste lufttechnische Trennmittel, das den in Fraktionen verunreinigender und verwertbarer Materialien zu trennenden eintretenden Materialstrom aus Schritt c) empfängt, den Strom in zwei Fraktionen so aufbereitet, dass die Fraktion der verunreinigenden schweren Materialien (d2) über den unteren Teil des ersten lufttechnischen Trennmittels extrahiert wird, während ein Gemisch aus den Fraktionen der verunreinigenden ultraleichten Materialien (d1) und der zu verwertenden Materialien (d3) über den oberen Teil des ersten lufttechnischen Trennmittels extrahiert wird und dieses Gemisch aus den Fraktionen verunreinigender ultraleichter Materialien (d1) und zu verwertender Materialien (d3) in das zweite lufttechnische Trennmittel eingeleitet wird, wobei die Fraktion der verunreinigenden ultraleichten Materialien (d1) über den oberen Teil des zweiten lufttechnischen Trennmittels entfernt wird, während die Fraktion der verwertbaren Materialien über den unteren Teil dieses Trennmittels extrahiert wird, um die mit den zu verwertenden Polymermaterialien vorkonzentrierte Fraktion zu bilden.

20. Verfahren nach irgendeinem der Ansprüche 1 bis 14, **dadurch gekennzeichnet, dass** wenn der aus dem Schritt c) kommende und in den Schritt d) eintretende Materialstrom aus fein zermahlenen Materialien mindestens 20 Gewichtsprozent Wasser enthält, eine mechanische Trennung mittels Siebung und/oder Formfaktor über eine Vorrichtung erfolgen kann, die ein der Form der verwertbaren Materialstückchen angepasstes Siebmittel aufweist.

21. Verfahren nach Anspruch 20, **dadurch gekennzeichnet, dass** das Siebmittel ein Rost mit kalibrierter Trennmasche ist, wobei die größte Abmessung der kalibrierten Masche höchstens 25 mm und bevorzugt höchstens 10 mm beträgt.

22. Verfahren nach irgendeinem der Ansprüche 1 bis 21, **dadurch gekennzeichnet, dass** die extrahierte Fraktion der verwertbaren Polymermaterialien bevorzugt mindestens 85 Gewichtsprozent der verwertbaren Polymermaterialien beträgt.

23. Verwendung der mit verwertbaren Polymermaterialien vorkonzentrierten Fraktionen aus dem Verfahren nach irgendeinem der Ansprüche 1 bis 22 zur Versorgung selektiver Trennverfahren, die die getrennte Extraktion jedes der verwertbaren Polymere gestatten.
